# EUROPEAN PATENT APPLICATION

(11) **EP 3 848 826 A1**
(43) Date of publication of application: **14.07.2021**
(21) Application number: 21150739.7
(22) Date of filing: 08.01.2021
(51) Int. Cl.: G06F 16/958, G06Q 20/06, G06Q 40/02

(54) **ACCOUNT BALANCE SHARING SYSTEM**

(30) Priority: 09.01.2020 TR 202000322; 12.07.2020 US 202016926728
(71) Applicant: Lydians Elektronik Para ve Ödeme Hizmetleri Anonim Sirketi, Istanbul (TR)
(72) Inventor: TOSMUR, FATIH, ISTANBUL (TR)
(74) Representative: Kayahan, Senem

(57) **Abstract**

The invention subject matter of the application is related to at least one credit card sharing system that enables the end user to pay on behalf of users added to the application through the user adding module just by using a mobile or similar device without carrying a physical credit card; that enables these users to define a temporary limit on at least one credit card which is defined into the system and which is owned by the user; and that enables the defined temporary limit to be spent at member shops by the member users of which this temporary limit is defined.

## Description

### Technical Field

The invention subject matter of the application is related to at least one credit card sharing system that enables the end user to pay on behalf of users added to the application through the user adding module just by using a mobile or similar device without carrying a physical credit card; that enables these users to define a temporary limit on at least one credit card which is defined into the system and which is owned by the user; and that enables the defined temporary limit to be spent at member shops by the member users of which this temporary limit is defined.

In another embodiment of the invention, an account sharing method has been developed. In this account sharing method, an account is shared between individuals and/or entities instead of a credit card. Also, in the account sharing method a person can share a given or certain amount of money in his or her account instead of sending money to other users. Thus, the account owner keeps all rights and control over the money while maintaining their usage parameters. Instead of a money transfer, the account sharing method provides an alternative financial feature.

### Background

In the prior art, there are systems that enable to make payments without requiring use of physical cards by registering the credit cards in applications used in mobile devices. However, the basic logic behind these systems is that they facilitate the credit card user to make payment without using the physical credit card.

Besides, during payments in said systems, the device running the application in which the credit card is registered must be used with the payment device at the business where the transaction takes place. In order to perform the payment procedure, the two devices must communicate with each other by using NFC (Near Field Communication) protocol. The payment can only be made by being approved after this stage.

In these systems, it is not possible for a credit card owner to authorize other users to use the credit card limit via the same application or similarly it is not possible for other users to use other people's credit cards for their own payments.

In the prior art of account sharing, people share money directly with other users via a simple money transfer. The money is transferred from one account to another account as a financial record. When the money transfer is approved, all the usage and control rights on the money of the sender is lost by the transfer.

Another prior art model is a supplementary card model. In this model, supplementary cards are created by a main credit card holder and the usage limits are defined for the cards. The supplementary cards use the defined limits of the main credit cards. In the supplementary card model, the main credit cardholder is also the owner of the supplementary card; there is basically no sharing. In the supplementary card model, all supplementary cards has dependency to main card. If the main card is cancelled, all supplementary cards are inactivated. In presented method, all cards are independent.

At the same time, supplementary card functions are in the form of sharing the credit card limit in existing applications. Basically, the limit of the main credit card is shared, not the money or an account. For this reason, the supplementary card is operated on a completely different basis than the model offered.

In the presented invention, the account is used as the main sharing source. The account owner keeps the main control over the account and money after a successful sharing. The presented method supports managing features and controls such as defining usage of limits and usage restrictions with monitoring transactions made by the participants.

### Summary

In the present invention, for spending in member businesses via the credit card, a user having a credit card can define a temporary expense limit to at least one user among the users who use the same application and who have been added to the application through the member addition module or in response to a request from one of the users who was added to the application via member addition module, the person can directly make a payment to a member business on behalf of that user.

With the presented model or method of "account sharing", a person can share a given or certain amount of money is his or her account instead of sending money to other users. Thus, the account owner keeps all rights and control over the money with maintaining their usage parameters. Instead of a money transfer, the presented method of account sharing provides an alternative financial feature.

In the development of the credit card sharing system of the invention, it is aimed that;
- A user having a credit card can define a temporary expense limit from at least one of his credit cards to another user who does or does not own a credit card but uses the same application and who has been added to the application via a member addition module,
- A user having a credit card can make a payment to member businesses on behalf of another user who does or does not own a credit card but uses the same application and who has been added to the application via a member addition module,
- A user having a credit card can request a temporary limit to spend in member businesses from another user who owns a credit card, "who" uses the same application and who has been added to the application via member addition module,
- A user having a credit card can request from another user who owns a credit card, who uses the same application and who has been added to the application via member addition module, to make a payment to a member business on behalf of him,
- These transactions can be performed mutually between all users who use the application and who have added each other to the application via a member addition module,
- A user who does or does not own a credit card can make a payment to a member business via the system without using a physical credit card with at least one card with a temporary limit defined for him by another user added to the application via the member addition module.

In the another embodiment of the invention which is account sharing, it is aimed;
- To avoid the transfer of money, sharing of a physical card or card information.
- To maintain the authorizations of the sharing person on the shared money and account.
- To ensure that the transactions regarding the shared account are traceable by the account owner.
- To provide a flexible structure in which users can define the relationship between the account and the card and to use the same account at any time by connecting a different means of payment.
- To add additional functions such as amount, duration, usage place restrictions and expenditure management features as usage parameters on the shared account.

### Brief Description of the Drawings

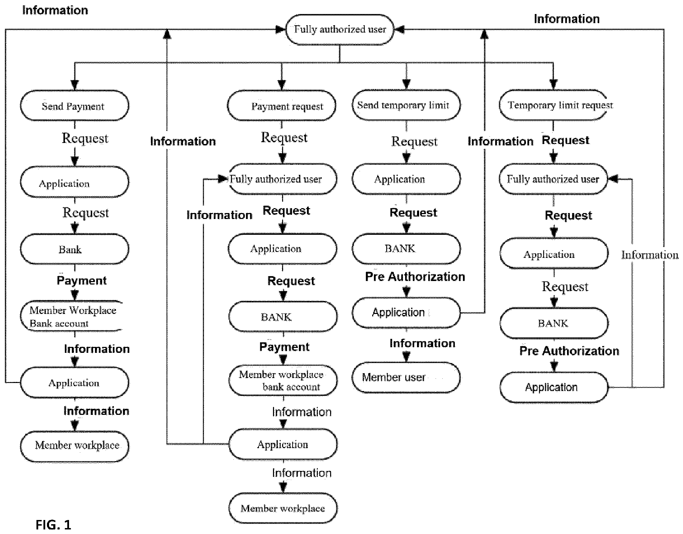

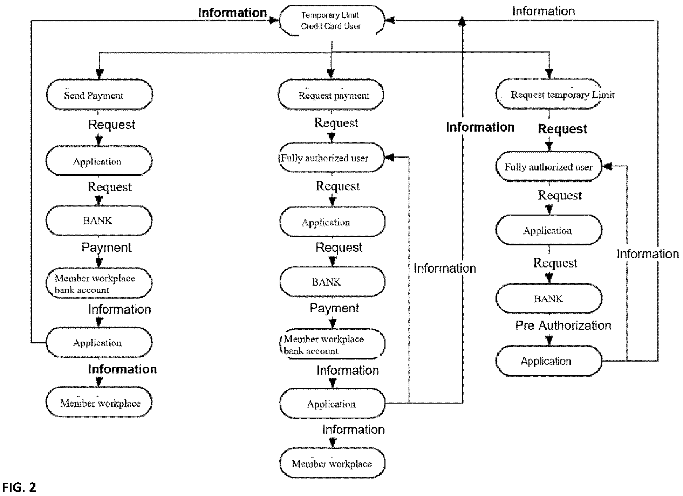

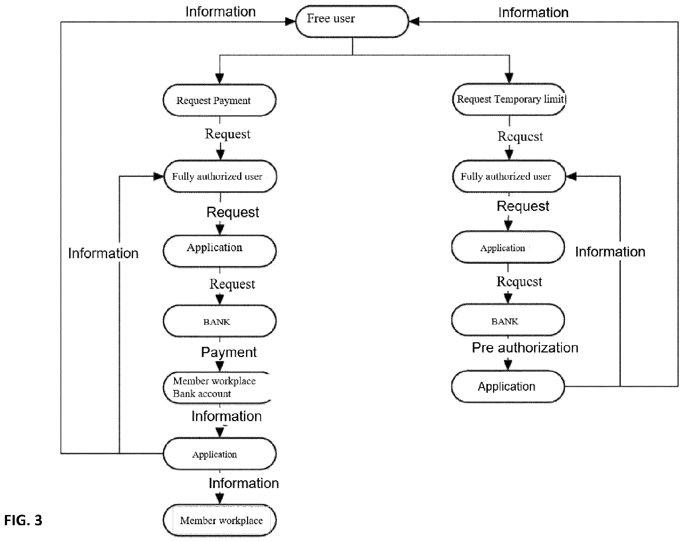

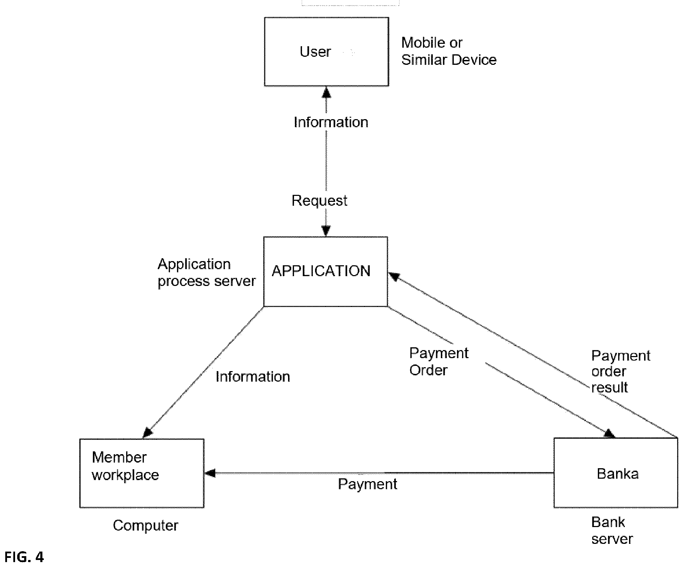

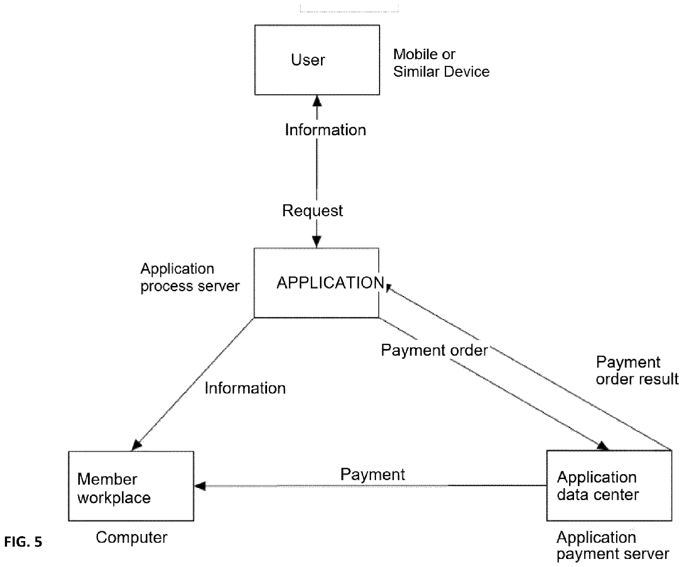

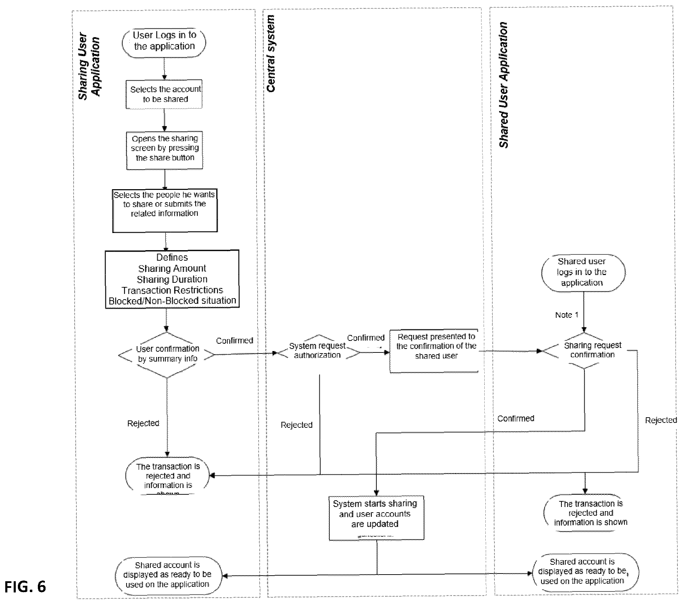

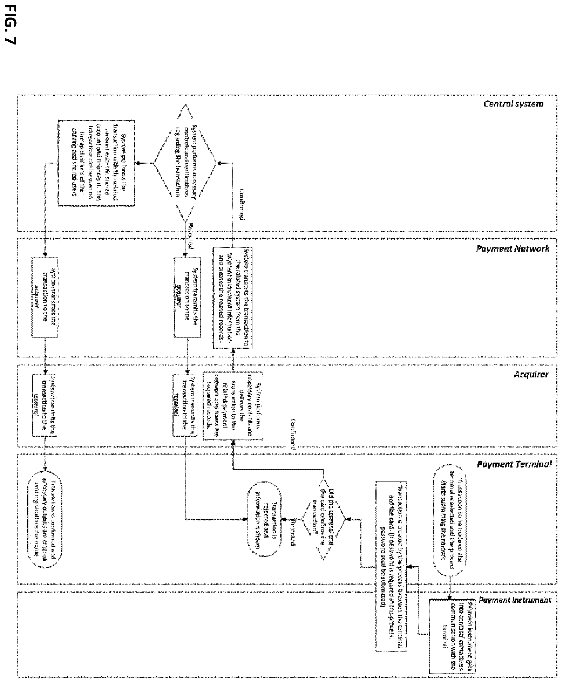

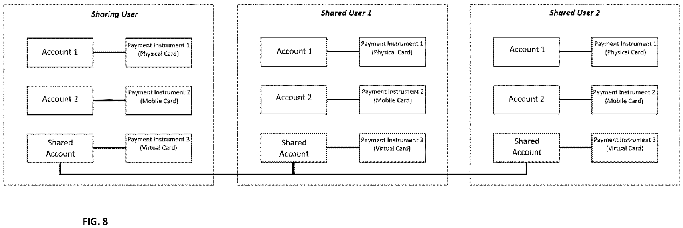

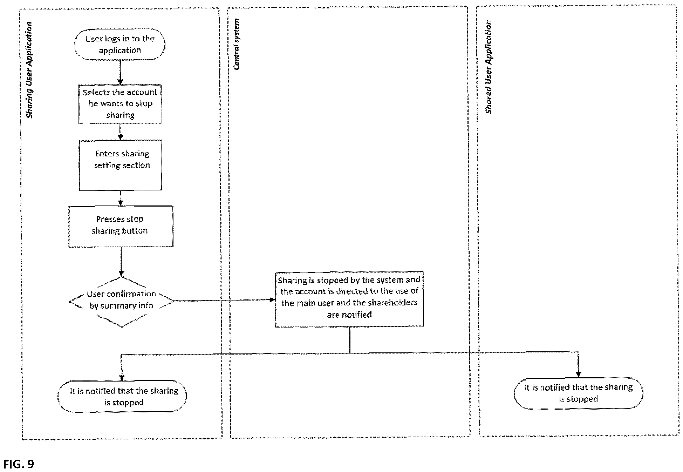

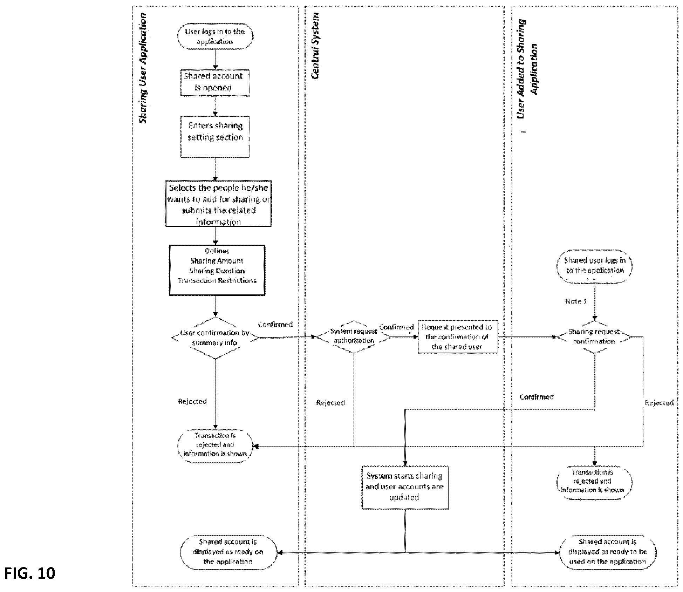

The figures and descriptions related to these figures used for providing a better understanding of the model proposed are given below.
1.) Figure 1 - Flowchart of Account Sharing
2.) Figure 2 - Spending from the Shared Account (e.g. Open Circuit Card)
3.) Figure 3 - Account Payment Tool Architecture
4.) Figure 4 - Suspending of Account Sharing
5.) Figure 5 - Adding a Person to Account Sharing
6.) Figure 6 - Flowchart of Account Sharing
7.) Figure 7 - Spending from the Shared Account (e.g. Open Circuit Card)
8.) Figure 8 - Account Payment Tool Architecture
9.) Figure 9 - Suspending of Account Sharing
10.) Figure 10 - Adding a Person to Account Sharing

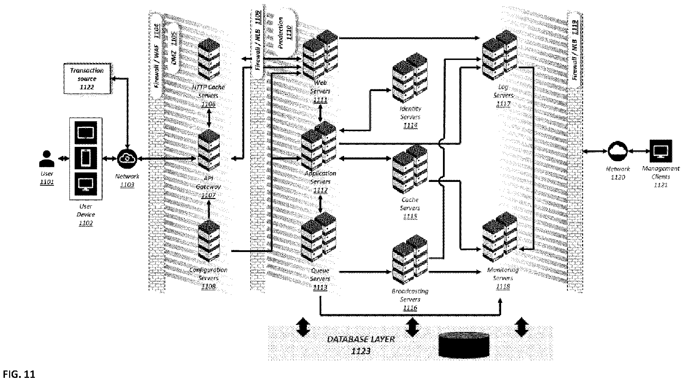

The figures **11 to 43** illustrates example diagrams for understanding of the invention in a technical detail. Various structural elements, hardware, software, modules, services, connection types, transaction types, device types and combinations may be implemented for the invention. The defined example technical details are not used for limiting the functionality of the invention.
- **Figure 11**: illustrates an example topology diagram disclosed mission critical component and their location and connections for the invention.
- **Figure 12**: illustrates an example ecosystem diagram that shows mission critical components of the invention and other related integrations.
- **Figure 13**: illustrates an example application server modular diagram that shows mission critical modules of the invention and related integrations.
- **Figure 14**: illustrates an example sequence diagram for a creation of an account sharing process.
- **Figure 15**: illustrates an example sequence diagram for changing shared amount of an existing account sharing.
- **Figure 16**: illustrates an example sequence diagram for updating advance parameters on an account sharing.
- **Figure 17**: illustrates an example sequence diagram for adding a new participant on an existing account sharing.
- **Figure 18**: illustrates an example sequence diagram for delete an existing participant on an existing account sharing.
- **Figure 19**: illustrates an example sequence diagram for participant limit change on an existing account sharing.
- **Figure 20**: illustrates an example sequence diagram for deleting an existing account sharing on the system.
- **Figure 21**: illustrates an example sequence diagram for handling participant acceptance & rejection process on an account sharing.
- **Figure 22**: illustrates an example sequence diagram for assigning a shared account to a participant financial instrument for usage.
- **Figure 23**: illustrates an example sequence diagram for purchase authorization process on a shared account.
- **Figure 24**: illustrates an example flowchart diagram for processing an account sharing creation process on application server.
- **Figure 25**: illustrates an example flowchart diagram for processing an amount update request of existing account sharing definition on application server.
- **Figure 26**: illustrates an example flowchart diagram for processing add (a) new participant(s) request of existing account sharing definition on application server.
- **Figure 27**: illustrates an example flowchart diagram for delete participant request of existing account sharing definition on application server.
- **Figure 28**: illustrates an example flowchart diagram for participant(s)' usage limit update request of existing account sharing definition on application server.
- **Figure 29**: illustrates an example flowchart diagram for deleting request of existing account sharing definition on application server.
- **Figure 30**: illustrates an example flowchart diagram for processing a participant response of existing account sharing on application server.
- **Figure 31**: illustrates an example flowchart diagram about processing "financial instrument assignment for an account sharing" request on application server.
- **Figure 32**: illustrates an example flowchart diagram about authorization process for a financial instrument transaction linked to a sharing account on application server.
- **Figure 33**: illustrates a sample diagram for general perspective of the sharing process and virtual account representation.
- **Figure 34**: is first stage of example - Before a purchase transaction
- **Figure 35**: is second stage of example - during the purchase transaction on an account sharing
- **Figure 36**: is third share of example - after the purchase transaction on an account sharing
- **Figure 37**: illustrates complex hierarchy between accounts, shared accounts, financial instruments with user information.
- **Figure 38**: illustrates an example graphical user interface (GUI) for adding participant for an account sharing.
- **Figure 39**: illustrates an example graphical user interface (GUI) for defining general parameters of an account sharing.
- **Figure 40**: illustrates an example graphical user interface (GUI) for editing an account sharing.
- **Figure 41**: illustrates an example graphical user interface (GUI) for editing advance parameters an account sharing.
- **Figure 42**: illustrates an example graphical user interface (GUI) for participant approval of an account sharing.
- **Figure 43**: illustrates an example graphical user interface (GUI) for financial instrument assignment to a shared account.

### Detailed Description of the First Embodiment

In its most basic form, the credit card sharing system of the invention which is an embodiment of the invention comprises at least one server and at least one mobile application.

In order for the system to be activated, the mobile application needs to be installed onto a mobile or similar device which may belong to any user and user record needs to be created in the server. Together with this, in an embodiment of the invention at least a member workplace (merchant) and at least a bank and/or at least a credit agency must be included in the system for the usage of system functions. In another embodiment of the invention, the system functions may be operational without the need to include any kind of credit agency or bank to the system.

Following the recording of these aspects into the system, the "credit card sharing" system is operated, and the operation and usage of the system is carried out by 6 basic process modules.

### A. User Registration Module:

The user registration module primarily enables the registration of the end user who is going to be using the system, to the system.

The below mentioned process steps are carried out for a member to become a user by completing the registration module functions of the end user.
- Installing a mobile application belonging to the system subject to the invention into a mobile or a similar device. The mobile application mentioned here, could be a version that is suitable for any kind of mobile processing system, but it could also have a structure that can be installed to any kind of mobile or other similar device which uses the related processing system.
- Creating a member user registration in the system by using the directives provided to the user by the mobile application that has been downloaded into a mobile or other similar device.
- Confirming the information entered via a verification method used by the system and completing the member user record. The verification method provided by the system that is mentioned here, can be any one of the verification methods used in the prior art such as verification by sms, verification by e-mail etc.

The member user registrations that have been entered into the system are grouped under 3 basic user types:
**1. Free User:** This is a user who is registered as a user into the system, but for whom a credit card has not been identified and who can use the functions of the system in a limited way, and who can only request a "temporary limit" or "payment" from other member users that have identified at least one credit card into the system and which are registered members to the system and who have been added to the application via only the member addition module.
**2. Temporary Limit User:** The temporary limit used, is a user to whom a "temporary limit credit card" has been identified by one or more member users, who is included into the system via the member addition module, and who can be observed to be registered into the system, having at least one credit card. This type of user has limited rights to use the system functions and he/she can only request "payment" or "temporary limit" from other member users that have at least a credit card and who are observed to be registered to the system or are added to the application via a member addition module and can transfer payment to member businesses using the "temporary limit credit card" that has been assigned for them.
**3. Fully Authorized User:** The fully authorized user is a user who has been registered to the system as a member user, who is a part of the system, who has added at least another user to the system and who has identified at least a credit card to the system. This type of user can use all of the system functions, can carry out payments for member workplaces (merchants) with his/her credit card, can make payments to member workplaces (merchants) on behalf of other member users who he/she has added by means of his/her own credit card via the member addition module, can transfer temporary limits to these users from his/her own credit card and may request payments to be carried out from these users to member workplaces (merchants) and/or can request a temporary limit for himself/herself.

The fully authorized user can not only transfer a temporary limit but can also carry out temporary limit transfers at certain periods of time regularly.

The user registration module "of credit card sharing" cannot be used to record member workplaces (merchants) directly to the system.

In order for a member workplace (merchant) to be registered to the system the related company must first of all make a written registration request application to the system.

After the registration request is received by the system, it shall be evaluated in terms of suitability according to certain criteria, and after it is confirmed, a **member workplace (merchant) code** is assigned for the related workplace (merchant) and the related workplace shall be registered to the system with a member workplace (merchant) status.

The member workplace (merchant) code that is pre-defined by the system has at least 8 digits, and it may comprise the license plate code, the post code, the phone code of the city where the member workplace (merchant) is located, the identification number assigned by the system for the member workplace (merchant) and/or the branch identification code that is assigned again by the system for each branch if the member workplace (merchant) has more than one branch, and it may also comprise a specific identification code that may be created by a pre-determined algorithm that is used by the system.

### B. Member User Addition Module:

The member user addition module basically enables the addition of, other member users that the member users who would like to use the system together with, to the application that has been downloaded to a mobile or other similar device.

The completion of the member user addition module functions shall be carried out by means of the below mentioned steps.
- Addition of one or more member users to the application in a mobile or similar device who has already been registered to the system via the user registration module, by the member user who has been registered to the system again via the user registration module. The addition process herein, can be carried out via the directory registration of a mobile or similar device, via social media applications, other mobile applications or manually.
- Confirming the member user addition process via a verification method used by the system, by the member user that is desired to be added to the system and completing the member user addition process. The verification method used herein, by the system may be any of the verification methods that are used in the known art such as sms verification, e-mail verification etc. and it may also be a verification method that shall be carried out over the system application as the system application shall be downloaded into the devices of both member users.

### C. Credit Card Identification Module:

The credit card identification module primarily enables the addition of at least a credit card that is desired to be used by the member user who is going to use the system, into the application of a mobile or other similar device.

The completion of the credit card identification module functions are provided by means of process steps that have been mentioned below.
- Defining one or more credit cards to the system which belongs only to the user by entering the credit card information into the related fields on the mobile application by the user who has been registered as a member user to the system via the user registration module.
- Confirming the credit card identification process via the verification method used by the system and completing the process. The verification method used by the system here, can be any one of the verification methods used in the prior art such as verification by sms, verification by e-mail etc.

The usage of the credit card identification module is optional and it is possible for the member user to use the system without identifying a credit card.

The registered credit card information is protected by means of encoding with at least 128 bits via the PCI DSS (Payment Card Industry Data Security Standard) standard or any other version thereof by the system according to an embodiment of the invention and is stored in the system in this manner.

In another embodiment of the invention the credit card information that has been identified, is stored in the memory of a mobile or other similar device into which the mobile application is downloaded and/or in the database of a credit agency and/or bank.

### D. Temporary Limit Request and Temporary Limit Transfer Module:

The temporary limit request and the temporary limit transfer module basically enables all member user types that shall be using the system to request a temporary limit from at least one of the member users that are credit card owners who have been observed to be registered to the system and who have been added to the application via the member addition module and if this request is confirmed, the module enables the identification of a credit card that is temporary and limited for the new member for which the request is carried out by the user member.

The completion of the temporary limit request and temporary limit submission module functions, by identifying them to a temporary limit credit card is carried out by means of the process steps that have been mentioned below.
- At least for one of the member users that own at least a credit card, who has been observed to be registered to the system and who has been added to the system via the member addition module by the member user to request a temporary limit.
- Submission of the temporary limit request to the member for whom the request was made by the system.
- Selection and confirmation of at least one of the credit cards that are registered to their own application by the member user for whom the request has been made for a temporary limit request.
- Identifying the confirmed limit request by the system to the application of the member user for whom the temporary limit credit card is requested.

The temporary limit credit card which has been defined here, can be optionally cancelled by the member user for whom the temporary limit credit card has been identified for and/or by the member user who has transferred the temporary limit.

The temporary limit credit card that has not been cancelled by the person transferring the temporary limit or the member user for whom the temporary limit credit card has been identified, shall remain open to the usage of this user for a predetermined period of time, and when this pre-determined period expires, the card is cancelled by the system. This application is used for increasing temporary limits that have been identified, at certain periods of time regularly.

A lower limit identification cannot be carried out via the temporary limit that has been identified as a temporary limit credit card to any member user and this limit cannot be transferred to another member user.

In another embodiment of the invention the process of identifying the temporary limit request that has been confirmed to the application of the member user who has requested this limit as a temporary limit credit card, is carried out by receiving a pre-authorization from the credit agency and/or bank and collecting the temporary limit from the member user credit card.

In another embodiment of the invention, the identification process of the temporary limit request that has been confirmed, by the system as a temporary limit credit card to the application of the member user who has made the request, is carried out, by collecting the temporary limit that has been identified from the credit card of the member user who has performed the temporary limit transfer process, and by keeping it in the system.

### E. Payment Request module:

The payment module basically allows all member user types who shall be using the system, to request the transfer of a payment directly to the member workplace (merchant) by at least one member user who is observed to have at least a credit card that is registered to the system, who has been added to the application via the member addition module.

In another embodiment of the invention, the payment request module is based on the principal of submitting the payment confirmation received by the system to the related credit agency or bank, and for this agency to make the payment to the member workplace (merchant), and the schematic view regarding this application has been provided in Figure 4.

The completion of the payment request module functions according to this embodiment of the invention has been enabled by the process steps mentioned below.
- The member user requests a direct payment specific to a single process that necessitates payment to a member workplace (merchant) from at least one of the member users that are observed to have at least a credit card registered to the system, who have been added to the application via the member addition module.
- The system submits the member workplace (merchant) payment request to the member user and member workplace (merchant) that the payment shall be transferred to.
- The member user that has received the member workplace (merchant) payment request confirms the payment by selecting at least a credit card that is observed to be registered to the system via the application.
- The system submits the payment confirmation that has been received to the credit agency or bank.
- The credit agency or bank that has received the payment confirmation regarding the payment to the member workplace (merchant) transfers the payment to the member workplace (merchant).
- A notification is sent via the application to the member user that has carried out the payment request, the member user from which the payment was requested and the workplace (merchant) who will receive the payment once the payment to the member workplace (merchant) has been completed successfully.
- A warning is sent via the application to the member user who has made the payment request, the member user from which the payment has been requested and to the member workplace (merchant) that shall be receiving the payment if the payment to the workplace (merchant) is unsuccessful.

In another embodiment of the invention, the payment request module is based on the principle that the payment confirmation is received by the system, and the system withdraws the payment from the credit card of the member user who is carrying out the payment process and transferring said payment to the member workplace (merchant), and the schematic view relating to this embodiment has been shown in Figure 5.

The completion of the payment request module functions according to this embodiment of the invention has been enabled by the process steps mentioned below.
- The member user requests a direct payment specific to a single process that necessitates payment to a member workplace (merchant) from at least one of the member users that are observed to have at least a credit card registered to the system, who have been added to the application via the member addition module.
- The system submits the member workplace (merchant) payment request, to the member user from whom the payment has been requested and to the member workplace (merchant).
- The member user that has received the member workplace (merchant) payment request confirms the payment by selecting at least a credit card that is observed to be registered to the system via the application.
- The member confirms the payment by selecting at least a credit card that can be observed to be registered to the system via the application to enable the payment amount to be withdrawn by the system from the credit card that has been selected by the member user regarding the received payment confirmation, and the payment is transferred to the system.
- The payment amount that is transferred to the system is transferred to the member workplace (merchant) to which the payment shall be made to, by the system.
- A notification is sent via the application to the member user that has carried out the payment request, the member user from which the payment was requested, and to the workplace (merchant) who will receive the payment once the payment to the member workplace (merchant) has been completed successfully,
- A warning is sent via the application to the member user who has made the payment request, to the member user from which the payment has been requested and to the member workplace (merchant) that shall be receiving the payment if the payment to the workplace (merchant) is unsuccessful,
- During the usage of the payment request module, the system shall request from the member user from whom the payment shall be collected from, to transfer to the member workplace (merchant), a confirmation within a pre-determined period of time. In the case that the confirmation period is exceeded, the system shall determine that the payment request has expired, and the process shall be deemed unsuccessful and the payment process shall be cancelled. If the payment process is cancelled, a warning shall be sent by the system, to the member user from which the payment was requested, and to the member user who has requested the payment and also to the member workplace (merchant) who was supposed to receive the payment.

During the usage of the payment request module, if desired, the member user by whom the payment has been requested to be paid to another member user can, if he/she desires, give an automatic payment confirmation for the amount that has been determined based on the member user for users that have been determined among users that the member user has added via the member addition module and from which the payment request has been made and can transfer payment to the member workplace (merchant) by means of this automatic confirmation process.

### F. Payment Transfer Module:

The payment transfer module basically enables to transfer the payment to the member workplace (merchant) from the member user that shall be using the system, by using at least a "temporary limit credit card" that has been registered by the member user for himself/herself who has been added to the application via the member addition module

The payment transfer module in this embodiment of the invention, is based on the principle that the payment request submitted to the system is submitted to the related credit agency or bank by the system, and this agency transfers the payment to the member workplace (merchant), and the schematic view according to this embodiment has been given in Figure 4.

The completion of the payment transfer module functions according to the embodiment of the invention is carried out by means of the process steps mentioned below.
- In order to transfer payment to a member workplace (merchant) by using at least one temporary limit credit card that has been defined by the member user for the person who has at least a card registered under his name in the system and who has been added to the application via the member addition module, the member user shall search the member workplace (merchant) who shall be receiving the payment, by entering the member workplace (merchant) code that has been assigned by the system for said workplace (merchant), by selecting the member workplace (merchant) to which the payment shall be transferred, from the "payment transfer" screen that can be viewed in the mobile application.
- After the member workplace (merchant) to which the payment shall be transferred is found, the payment order is submitted to the system.
- The payment order received is submitted by the system to the credit agency or bank.
- The credit agency or the bank that has received the payment order for the member workplace (merchant), transfers the payment to the member workplace (merchant).
- The member user and member workplace (merchant) is notified after the payment to the member workplace (merchant) is transferred successfully from the credit card of the user.
- The member workplace (merchant) and the other member user who has sent the temporary limit to the member user notifies via the application that the payment to the member workplace (merchant) has been transferred from the temporary limit credit card.
- If the payment to the member workplace (merchant) is unsuccessful a warning message is submitted to the member user and the member workplace (merchant) via the application.

According to another embodiment of the invention, the payment transfer module, enables the transfer of the payment by the system to the member workplace (merchant) by processing the payment order submitted to the system. The schematic view relating to this embodiment is shown in Figure 5.

In this case, the member user who has requested payment to be transferred to the member workplace (merchant) transfers the related payment to the system instead of transferring the payment directly to the member workplace (merchant), and the system transfers the related payment to the member workplace (merchant).

The completion of the payment transfer module functions according to the abovementioned embodiment of the invention is carried out by means of the process steps mentioned below.

In order to transfer payment to a member workplace (merchant) by using at least one temporary limit credit card that has been defined by the member user for the person who has at least a card registered under his name in the system and who has been added to the application via the member addition module, the member user shall search the member workplace (merchant) who shall be receiving the payment by entering the member workplace (merchant) code that has been assigned by the system for said workplace (merchant), by selecting the member workplace (merchant) to which the payment shall be transferred, from the "payment transfer" screen that can be viewed in the mobile application.
- After the member workplace (merchant) to which the payment shall be transferred is found, the payment order is submitted to the system.
- The payment amount collected from the credit card that belongs to the member user is transferred to the member workplace (merchant) by the system,
- The member workplace (merchant) and the other member user who has sent the temporary limit to the member user notifies via the application that the payment to the member workplace (merchant) has been transferred from the temporary limit credit card.
- If the payment to the member workplace (merchant) is unsuccessful a warning message is submitted to the member user and the member workplace (merchant) via the application.

It is possible for the system to collect a predetermined service fee, in order to carry out unlimited processes during a certain period of time via the package payment method or payment per process method, from all member user types, during usage of each module that has been defined above as the modules of the system.

The payment to be transferred to the member workplace (merchant) can be transferred to the bank account of the member workplace (merchant) or any other bank account that is provided by and belongs to the member workplace (merchant).

### Detailed Description of the Another Embodiment

In development of the account sharing system of the invention which is another embodiment, it is aimed;
- To avoid the transfer of money, sharing of a physical card or card information.
- To maintain the authorizations of the sharing person on the shared money and account.
- To ensure that the transactions regarding the shared account are traceable by the account owner.
- To provide a flexible structure in which users can define the relationship between the account and the card and to use the same account at any time by connecting a different means of payment.
- To add additional functions such as amount, duration, usage place restrictions and expenditure management features as usage parameters on the shared account.

In this another embodiment of the invention, the limit is shared between the pre-paid cards issued by the company. By the limit feature defined in said cards, a payment function is provided such that the shopping performed by the sub-users can be paid from the account of the user who has defined the limit (main account).

Here, there are two different limit sharing methods as blocked and non-blocked and, in both methods, the main account defines and authorizes the sub-users.

The main account owner defines a right of use for the sub-users within his own balance, however in the process, money transfer between main and sub accounts is not available, and the balance is recorded on the main account.

At this point, the main account owner grants the sub-users an authorization only for transaction, the user who is the main account owner is responsible for all the transactions performed over the account and the system assumes that all the transactions are made by the main account. However, the tracking records of the transactions performed by the sub-users are monitored and saved.

Limit sharing is performed by a definition between the -member cardholders. The user who is the main account owner selects the person or the people to whom he desires to define a limit from the list of people, and he can define a limit with a desired amount from his own account.

This definition process is only executed as granting a right of use to another user from the balance and does not contain any transfer of balance. In other words, the defined limit is only defined for other users as a right of usage and the electronic money (balance) stays in the balance account of the person who defines the limit.

The defined limit can be assigned to more than one sub-user at the same time. All control of the assigned limit is under the control of the user who assigns the limit. Said user has a privilege to manage and perform revisions including cancelation on the assigned amount.

The limit assignment between the users can be performed by phone number, account number, identification number, card number or another unique identifier. If desired, the authorization procedures of the limit assignment functions can be set-up as verification over SMS, mobile application or the web.

When the limit is assigned, the shared limit is assigned to a plurality of people, a single limit pool is used. When said pool is used, the balance is updated online and the usage rights of all users are deducted from the limit pool by the usage amount.

In all transactions, during authorization, the balance of the main account is checked for sufficient funds. If the defined limit and the balance of the main user are sufficient, the authorization is granted.

Limit sharing is set-up in two ways as blocked and non-blocked;
- In the blocked sharing, the shared amount is blocked on the main user's account. This means that the main user can't use the shared amount and said user's available balance is calculated as subtraction of blocked amount from main balance.
- In the non-blocked sharing, the shared amount is not blocked on the main user's account and the main user has the right to use all of his/her balance. If the main user spends his/her own balance, the incoming transactions of the people that have the right to use the limit are authorized over the main account's balance according to limits defined by the owner of the main account. If there is sufficient balance in the main account, the transaction is authorized.

Exemplary transaction scenario: In the embodiment of the invention described here; let's assume that the person who defines the limit is account A, and there is 8000 TL in account A.-

In the provided example, before defining the limit, the balance of A1 was defined as 400 TL and the balance of A2 was defined as 500 TL.

In the example, the user A defines a limit of 1000 TL for the users A1 and A2.

The user A can perform the sharing in two ways such as blocked and non-blocked.

The example application of the balance, limit and authorization procedures of the blocked sharing is described below.

In the blocked sharing, the shared balance is restricted for the use of user A by being blocked in the balance of user A. However, here the balance is still kept on account A.

In the case of this example, when the user A shares a 1000 TL blocked limit with users A1 and A2, 1000 TL is deducted from the available limit of the user A and the available balance of the user A becomes 7000 TL.

The balances of the users A1 and A2 will be their current balances + amount remaining from the share. In the example, when the first assignment is carried out but not spent, 400 + 1000 is defined for A1 and 500 + 1000 is defined for A2. At this stage, the assignment is only systemic definition and money transfer is not required. Users A1 and A2 can only spend a total of 1000 TL from the shared balance until the balance is completely processed in the account of user A. In this process, no electronic money is issued in the system.

After the limit defining process, if we assume that the user A1 will perform an 800 TL transaction, this transaction is performed over the shared balance since it is over the current balance of the user. Here, the order of the use of the balances will be managed by a parameter.

The 800 TL transaction is executed over the shared limit, which is the balance of account A. Even though the transaction is performed by user A1, that balance is used from the account A. In this flow, besides usage priority of the balances, partial usage is also available as an option. In the partial use, it is possible that first the balance prioritized by the parameter defined by the user A1 (his own main balance or the balance shared by the user A) is used and then the remaining amount is withdrawn from the other balance.

After the 800 TL transaction is authorized by the system, the total balance of A will be reduced to 7200 TL and the shared limit will be reduced to 200 TL.

After this transaction, the users A1 and A2 can only use 200 TL of shared limit.

If user A tries a 7200 TL transaction after user A1 uses 800 TL, this transaction will return an insufficient fund result. The reason for this is that the shared limit is shared as blocked. 200 TL of the 7200 TL is kept as blocked for use of A1 and A2.

The user A can have the right to use all his balance by canceling the shared limit definition if desired. At this stage, all usage rights are managed according to the settings of the owner of the account. When desired, user A can cancel the assignments and reset the shared amount.

The 800 TL transaction can be seen in the transaction history of the user A. The responsibility of this transaction belongs to the user A. The transaction is seen in the transaction history of user A, but this transaction is also shown in the transaction history of the A1 user since it is carried out in relation to the shared limit.

When the case where user A shares 1000 TL as non-blocked is examined; the example application of the balance, limit and authorization processes is described below;

After the definition of the limit, the usable balance of the user A will be 8000 TL which is equal to the card balance. The usable balances of the users A1 and A2 will be defined in their current accounts as 400 TL + 1000 TL and 500 TL and 1000 TL, respectively.

After user A1 performs 800 TL transaction, the usable main account balance of user A will be 7200 TL. After this transaction, when the user A performs 7200 TL transaction, this transaction will be authorized since there is no blockage on the shared 200 TL and the user A can spend his entire balance.

With the model used in another application of another embodiment of the invention, the main object is that instead of transferring money to other users, the account-sharing person can easily share a determined amount among the people and maintain their control over money and manage these usage parameters in relation to the money shared to these people. Thus, an alternative model is presented to the users by managing the accounts and the access rights to these accounts instead of the uncontrollable money traffic that is experienced continuously.

At the same time, opening a bank account or having a credit card requires certain conditions and requirements. Therefore, there is frequent card information sharing or physical card sharing among people. Sharing the cards between people in this way causes theft of card information, unauthorized transactions or illegal results. Users who do not want to share their card or card information have to give up shopping or take the time to do it themselves.

Often companies experience the following in the spending process: If a certain amount of subsistence is given by money transfer, the unspent amount of the subsistence must be transferred back. This means additional work and process, and in some cases, if no transfer is made, an effort is made to collect the unused amount by the authorities.

At the same time, after sending money, expenditures are tracked online and spending authorizations cannot be controlled.

In the wallet sharing model, as in the example above, the amount of subsistence is not given by money transfer, but as the account sharing/usage right for a certain period of time, the need to transfer the unused amount back is completely eliminated.

No matter when the wallet sharing is made by the person, it can be made transitorily by determining the start-end dates. This feature also offers the person to share a pre-planned pre-definition.

In Figure 7, spending flow is shown as an open circuit board operation. In this example representation, standard flows are performed on the card, terminal, acquirer and payment network. These flows can vary depending on the type of transaction. Although the payment instrument and system are of different variants, the transaction coming to the system is subject to controls, and authority appropriate to that payment instrument, and the shared account usage described in the main useful model is managed by the central system regardless of the payment instrument.

Figure 3 illustrates a flow chart of requesting payment and requesting a temporary limit from a user of the Account Payment Tool Architecture.

### Detailed Description of the Model

In its basic form, the account sharing model of the invention comprises at least one server and at least one mobile application or web site.

In order for the system to be activated, the mobile application needs to be installed onto a mobile or similar device which may belong to any user and user record needs to be created in the server. As the account sharing payment tool will be integrated into the existing card payment systems structure, as basic card payment components, at least one member workplace (merchant), the financial institution to which the member workplace (merchant) is affiliated and the intermediary institution that provides the accounting and communication between institutions and their existing systems are required in order for people to spend money,

The operation and use of the model is carried out through the modules described below;

### A. Application and User Management Module:

In order to open an account in the system, the user must give the necessary information to the system during the registration step. After the control and approval of the information received from the user, the necessary user records are created in the system. The password setting steps that are also used in introduction to the application, customer verification and determining the limits according to the verification method is also provided at the application step. The relevant module, which provides the systemic management of all these processes, creates their records and manages the life cycle, is the application module.

The following steps describe the application process;
- The process begins with the installation of the mobile application by the user on a mobile or similar device. The application is downloaded to the device from the relevant application pool in accordance with the mobile operating system used. The operating system used by the device, the application suitable for the device and version are presented in the pool.
- Following the opening of the installed application by the user, the information requested in the application processes is received by directing the customer through the application.
- The necessary information is checked with the application module of the information given by the user, and the user is verified with the necessary verification code (SMS/email) etc. steps to verify the customer.
- If there is no obstacle in the verification and registration of the user, user records are created in the system and the authorization to enter the mobile application is defined.

### C. Account and Card Management Module:

Users registered in the system can create an account and payment tool through the application. The payment tool can be of many different types. These can be different types of open or closed loop payment tools such as physical magnetic card, chip card, chip and near field communication (NFC) contactless card, Quick Response Code (QR Code), mobile payment card, Host Card Emulation (HCE), embedded Secure Element (eSE), Apple Pay™, Google Pay™ etc.), virtual card, mobile application (in-app payment), web portal (in-app payment). The term payment instrument used in this document covers all payment instruments. The use of a payment instrument in the proposed model is necessary for the use of money. However, the payment instrument used does not essentially affect the use of the model and can operate independently from the payment instrument. The user can use the payment instrument he/she desires by adding or changing it through the application.

### Creating an account

As soon as the users are registered to the system, a default account is assigned. If a different account is not defined in the system, the user can carry out financial transactions from this account with a default exchange rate. At the same time, account sharing functions offered through a single account can be executed.

The user can create different accounts in the system. To do this, he/she has to perform the following steps;
- The user logs into the application and starts the account creation step from the relevant menu.
- After entering and confirming the basic data such as the account name to be created and exchange rate information, the account is actively displayed on the application.

### Creating a payment instrument

- Users registered in the system can create a payment instrument through the application or can request a physical payment instrument.
- To create the payment instrument, the type of payment instrument desired to be created on the relevant menu is selected and the creation is performed by filling in the required information. When a physical payment instrument is created, the requested payment instrument is transmitted to the specified address and is delivered to the user.

### Identifying a prepaid card

- In order to obtain physical cards, users can register the cards with or without the amount they receive from various stores into the application as a payment instrument by entering their card information through the application. They enter the card information that they want to register to the system via the application and after the verification steps, the information is registered in the system as a payment instrument.

### Users registered in the system can create an account and payment tool through the application.

- The user logs in to the application and opens the account he/she wants to associate with the payment instrument from the relevant menu.
- When the "add-payment-instrument" button is pressed, the payment instruments created by the user are displayed.
- The user selects and approves the payment instrument he/she wishes to associate.
- The relevant account and payment instrument are associated with each other in the system and after this transaction, transactions from the associated payment instrument are carried out from the account to which it is linked as is illustrated in FIGURE 8, which is an account payment tool architecture.

The users match their payment tools with their accounts in order to use their existing accounts for their expenditures. If the user has a single account, all payment instruments created are linked to this account.

Creating a payment instrument is optional and it is possible for the user to use the system without defining a payment instrument.

Users who do not create a payment instrument but have at least one active account in the system can share via this account and can use this account for transactions (e.g. paying bills, paying to contracted e-commerce sites) for making direct payments within the application.

### D. Account Sharing

Figure 1 illustrates a flowchart of payment request, sending payments, sending a temporary limit and a temporary limit request of the account sharing.

Users get a default account when they are included in the system. Even if they have a single account or different accounts, they can open their accounts to people.

**To share the account, the following steps are performed;**
- The user logs into the application and selects the account he wants to share.
- Clicks on the "share account" button on the selected account screen.
- He/she chooses the person he wants to share with by determining the recipient on the page that is opens.
- On the page opened with the choice of person, the user selects on category basis or member workplace (merchant) basis, the sharing name , the amount of sharing, the duration of sharing (can be selected indefinitely), or the date range (start and end date) within which the sharing will be valid.
- If the user wants to assign more than one person for the same sharing, the user performs the step of adding another person.
- The user selects whether the shared amount is blocked or unblocked on the account.
- The user views summary information with the confirmation stage and approves sharing.
- After this process, the account sharing request is submitted to the approval of the people shared.
- After the approval of the people shared through their applications, the sharing starts.
- When the sharing starts, the person who shares can view the amount of sharing and how much money he/she has left for use from that account according to the status of the account being blocked or unblocked.
- With the start of the sharing process, the people who are shared will be able to see the accounts shared over the application.
- Shared people can spend by the shared account by associating their existing payment means with the account or by using the shared account directly at the in-app payment points.

### Blocked and non-blocked sharing

- Account sharing can be made as blocked or non-blocked. The amount shared in the blocked share is blocked from the money on the account and closed for the use of the shareholder and the balance that can be used is shown by deducting the blocked amount from the account balance. In this case, the sharing user will not be able to use the amount they share in their own expenditures.
- In non-blocked sharing, the sharing person has the right to spend all the money in the account and all the amounts in the account appear as available balance.

### Creating usage restrictions

Spending restrictions can be imposed while sharing. Spending restrictions can be created in 2 ways. The first of these may be determining the spending limits according to category. The person can choose the channels to which the shared people can spend or limit it to a certain amount. This restriction can be made by grouping the member workplace (merchant) category codes or with a single category code. In more detail, users can also group category codes themselves and define restrictions on usage.

A different restriction can be made specifically for the member workplace (merchant). By listing the member workplaces (merchants) that have been previously used, it will be possible to ban the selected member workplace (merchant) completely, to select only that member workplace (merchant) or to set a limit on the basis of the member workplace (merchant).

With transaction types and sub-transaction codes, limitation or blocking can be applied on a transaction basis. In addition to these, it is possible to create restrictions on the basis of e-commerce, cash withdrawal, sending money, Mo/To, domestic and international transactions etc.

### Sharing request

Sharing requests can be sent through the system. The process is as follows;
- After logging into the application, the person with whom sharing can be requested from is determined on the screen.
- Then the requested amount, explanation and duration are entered with the submit button after entering the information.
- The request is delivered to the requested person through the application.
- The person reads the request information, if he/she approves, the account is selected and the sharing parameters are displayed as in sharing again. This time, the sharing parameters are filled in by default, as requested. The user can change these parameters if he/she wishes.

Figure 6 illustrates a flowchart of Account Sharing where a user logs into an application, selects an account to be shared, opens a sharing screen, selects people the user wants to share or submits related information. The sharing account may have a blocked or non-blocked situation, and if the user is confirmed by summary information, then a system request is authorized and if the user is not confirmed by summary information, a transaction is rejected.

Figure 7 illustrates the process of spending from the Shared Account (e.g. Open Circuit Card) in a central system, a payment network, an acquirer, a payment terminal and a payment instrument.

Figure 8 illustrates an Account Payment Tool Architecture between a sharing user and two shared users.

Figure 9 illustrates suspending of Account Sharing where a user logs into an application, selects an account he wants to stop sharing, enters a sharing setting section, presses a stop sharing button and the sharing is stopped by the system when the user is confirmed by summary information.

Figure 10 illustrates adding a person to Account Sharing where a user logs into an application, a shared account is opened, enters sharing setting section, selects people the user wants to add sharing or submits related information. If the user is confirmed by summary information, then a system request is authorized and if the user is not confirmed by summary information, a transaction is rejected.

### Detailed Description of the third Embodiment of the Invention

The third embodiment of the present invention "account balance sharing system" which can run as "On-Premises" as well as in different configurations such as Infrastructure as a Service (IaaS), Platform as a Service (PaaS), Software as a Service (SaaS). Additionally, the mentioned servers can be in virtual structure.

The third embodiment of the present invention comprises;
- at least one or more user device such as a smartphone, tablet, laptop computer, desktop computer, game console, wearable smart device or any other device which is working with a processor, microprocessor, memory, user interface device, and having network capabilities,
- at least one or more network which provides data transfer between main system and other related systems or devices
- at least one or more database which is an organized collection of data, generally stored and accessed by computer applications such as SQL Server, Oracle, PostgreSQL, etc.
- at least one or more application servers which carries the main modules and functions of the invention,

The third embodiment of the present invention may further comprise;
- at least one or more payment instrument which represent a digital or physical personalized device(s) and/or set of procedures and used in order to initiate a payment order. (e.g. smart card, virtual card, QR code, Near Field Communication (NFC) contactless card, mobile payment device.).
- at least one or more transaction source which can be a psychical device or a software (e.g. Point of Sale (POS), Virtual Point of sale (VPOS), a QR reader with a software, Mobile device) and represents the location where the transaction is made. The transaction source can be the user device itself. In case of In-app (In application) payment and purchases, it is possible to spend directly on the account without the payment instrument. This is also valid for cases where transactions are made directly on the account through the browser on user device.
- at least one or more firewall which is a technological barrier designed to prevent unauthorized or unwanted communications between computer networks or hosts of the system,
- at least one or more management clients which represent application-based or browser-based management interfaces that works on a computing device with a processor, microprocessor, memory, user interface device and network capabilities.
- at least one or more HTTP cache servers which provide pre-optimized and cached results of HTTP requests for smooth client experience.
- at least one or more API Gateway which sits between a client and a collection of backend services and acts as a reverse proxy to accept all application programming interface (API) calls, aggregate the various services required to fulfill them, and return the appropriate result,
- at least one or more configuration servers which store and provide all of the application settings for all environments (development, test and production).
- at least one or more Web Servers which manage, transmit and receive client requests on the World Wide Web (www).
- at least one or more queue servers which are used for inter-process communication (IPC), or for inter-thread communication within the same process.
- at least one or more identity servers which are used for authentication and authorization of the clients.
- at least one or more cache servers which provide copy of the business data for performance improvements and scalability.
- at least one or more broadcasting servers which send SMS messages, e-mails and mobile notifications to the clients,
- at least one or more log servers which store, analyze and show application logs for further investigations.
- at least one or more monitoring servers are used for monitoring system resources like CPU usage, memory consumption, I/O, network, disk usage, process and application metrics.

Figure 11 illustrates an example topology diagram disclosed mission critical component and their location and connections for the invention. Various type of topology and modules may be implemented on multiple servers or different topology for the invention.

The user device 1102 can be a smartphone, tablet, laptop computer, desktop computer, game console, wearable smart device or any other device works with a processor, microprocessor, memory, user interface device, and network capabilities. Transaction Source 1122 represents a location where the transaction is made. The transaction source can be a psychical device or a software (e.g. Point of Sale (POS), Virtual Point of sale (VPOS), a QR reader with a software, Mobile device). The network 1103, 1120 provides data transfer between main system and other related systems or devices. The communication may include wireless, wired or their combinations on a local area network (LAN), a wide area network (WAN), and any data communication (e.g. internet, intranet). Various communication protocols and layers may use, according to device, data and process-based requirements (e.g. Hypertext Transfer Protocol (HTTP), Transmission Control Protocol (TCP)/ (Internet Protocol) IP (Internet Protocol), User Datagram Protocol (UDP).) Firewall 1104, 1119 is a technological barrier designed to prevent unauthorized or unwanted communications between computer networks or hosts. Web Application Firewall (WAF) 1104 is a web application firewall (WAF) is a specific form of application firewall that filters, monitors, and blocks HTTP traffic to and from a web service. By inspecting HTTP traffic, it can prevent attacks exploiting a web application's known vulnerabilities, such as SQL injection, cross-site scripting (XSS), file inclusion, and improper system configuration. The Network Load Balancer (NLB) 1119 is a device that distributes traffic across several servers by using the TCP/IP networking protocol. By combining two or more computers that are running applications into a single virtual cluster, NLB provides reliability and performance for web servers and other mission-critical servers. The demilitarized zone (DMZ) 1105 is a perimeter network that protects an organization's internal local-area network (LAN) from untrusted traffic. A common DMZ meaning is a subnetwork that sits between the public internet and private networks. Production 1110 represents group of systems that used to process mission critical applications. Management clients 1121 represent application-based or browser-based management interfaces that works on a computing device with a processor, microprocessor, memory, user interface device and network capabilities. HTTP cache servers 1106 provide pre-optimized and cached results of HTTP requests for smooth client experience. API Gateway 1107 sits between a client and a collection of backend services and acts as a reverse proxy to accept all application programming interface (API) calls, aggregate the various services required to fulfill them, and return the appropriate result. Configuration servers 1108 store and provide all of the application settings for all environments (development, test and production). Web Servers 1111 manage, transmit and receive client requests on the World Wide Web (www). The primary function of the servers is to store, process and deliver web pages to clients. Application servers 1112 work with the web servers to handle requests for dynamic content, such as servlets, from web applications. The invention main modules and functions are located in application servers. Queue servers 1113 are used for inter-process communication (IPC), or for inter-thread communication within the same process. Identity servers 1114 are used for authentication and authorization of the clients. Cache servers 1115 provide copy of the business data for performance improvements and scalability. Broadcasting servers 1116 send SMS messages, e-mails and mobile notifications to the clients. Log servers 1117 store, analyze and show application logs for further investigations. Monitoring servers 1118 are used for monitoring system resources like CPU usage, memory consumption, I/O, network, disk usage, process and application metrics. Database 1123 is an organized collection of data, generally stored and accessed by computer applications such as SQL Server, Oracle, PostgreSQL, etc.

The third embodiment of the present invention also comprises the below components;
- at least one or more Graphical User Interfaces (GUIs) which are provided for user activities to provide account sharing functionality to the user,
- at least one or more communication network which provides data transfer between main system and other related systems or devices,
- at least one or more Application Server which represents the physical environment in which the main software of the invention runs.

**The third embodiment of the present invention may also further comprise the below components;**
- at least one or more Payment network which represents a central institution's system that is responsible for managing, maintaining, reconciliation and settlement for all financial and transaction flow between financial institutions, devices, terminals and other parties under a schema, (e.g. Mastercard®, VISA® or domestic payment schemas).
- at least one or more Acquirer which represents a financial institution's system that processes payment instrument payments on behalf of a merchant and then settles the transaction with the payment instrument's issuer directly or via a payment scheme.
- at least one or more Transaction Source which represents a location where the transaction is made.
- Payment instrument which represent a digital or physical personalized device(s) and/or set of procedures and used in order to initiate a payment order. (e.g. smart card, virtual card, QR code, Near Field Communication (NFC) contactless card, mobile payment device.).
- at least one or more Web Servers which manage, transmit and receive client requests on the World Wide Web (www).

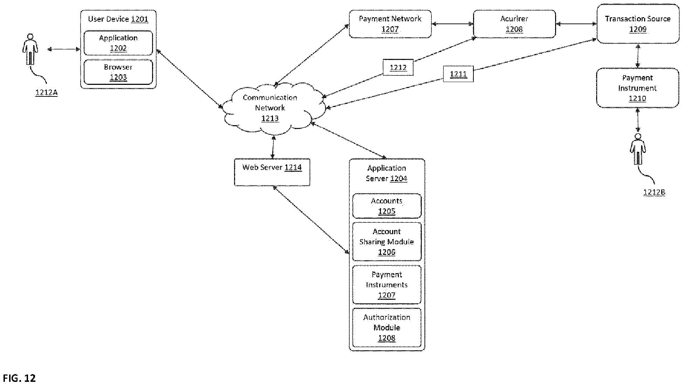

**Figure 12** illustrates an example ecosystem diagram that shows mission critical components of the invention and other related integrations.

Graphical User Interfaces (GUIs) are provided for user activities. After the user **1212A** logs in to the system, can use the provided account sharing functionality. GUIs can be displayed over **1202** an application or browser **1203** running on the device. The user device **1201** can be a smartphone, tablet, laptop computer, desktop computer, game console, wearable smart device or any other device works with a processor, microprocessor, memory, user interface device, and network capabilities. The communication network **1213** provides data transfer between main system and other related systems or devices. The communication may include wireless, wired or their combinations on a local area network (LAN), a wide area network (WAN), and any data communication (e.g. internet, intranet). Various communication protocols and layers may use, according to device, data and process-based requirements (e.g. Hypertext Transfer Protocol (HTTP), Transmission Control Protocol (TCP)/ (Internet Protocol) IP (Internet Protocol), User Datagram Protocol (UDP).) Payment network **1207** represents a central institution's system that is responsible for managing, maintaining, reconciliation and settlement for all financial and transaction flow between financial institutions, devices, terminals and other parties under a schema, (e.g. Mastercard®, VISA® or domestic payment schemas). Acquirer **1208** represents a financial institution's system that processes payment instrument payments on behalf of a merchant and then settles the transaction with the payment instrument's issuer directly or via a payment scheme. Acquirer system transmits, receives electronic data between terminal and other financial institutions. If the financial instrument does not belong to a schema, transactions **1212** can transmit directly from the acquirer. If the financial instrument belongs to a schema, the transactions will be sent to the relevant payment network and reach the main system through it. Transaction Source **1209** represents a location where the transaction is made. The transaction source can be a psychical device or a software (e.g. Point of Sale (POS), Virtual Point of sale (VPOS), a QR reader with a software, Mobile device). Payment instrument **1210** represent a digital or physical personalized device(s) and/or set of procedures and used in order to initiate a payment order. (e.g. smart card, virtual card, QR code, Near Field Communication (NFC) contactless card, mobile payment device.). Application Server **1204** represents the physical environment in which the main software of the invention runs. The invention main modules run on physical servers that have the ability to connect to the network, have a processor and memory.

The invention can run as "On-Premises" as well as in different configurations such as Infrastructure as a Service (IaaS), Platform as a Service (PaaS), Software as a Service (SaaS). Web Servers **1214** manage, transmit and receive client requests on the World Wide Web (www). The primary function of the servers is to store, process and deliver web pages to clients.

The third embodiment of the present invention also comprises the application server comprising the below modules;
- at least one or more accounts which holds all account information with balances,
- at least one or more account sharing module which provides required sub service for handling account share related process,
- at least one or more share/create module which enables an account sharing request to be received and the account sharing to be created on the system,

The third embodiment of the present invention also comprises the application server may also further comprise the below modules;
- at least one or more transaction message which represents financial transactions such as purchase ... etc. which are transmitted by a payment network, acquirer or a transaction source such as a POS, Virtual POS. The source of the transaction can be the user device for transactions made directly on the account without financial instruments via in-app or browser.
- at least one or more firewall which is a technological barrier designed to prevent unauthorized or unwanted communications between networks and production servers.
- at least one or more load balancer which distributes traffic across several servers according to data load.
- at least one or more API Calls, code invocation which can be initiated by directly a client application on user device or a browser.
- at least one or more authorization module which is responsible for generate a response for incoming transaction message.
- at least one or more payment instrument-based authorization which is a sub service of authorization module responsible for payment instrument specific controls and authentication such as personal identification number (PIN) and cryptograms.
- at least one or more account based authorization which is a sub service of authorization module responsible for direct financial request over an account such as in-app payments.

This authorization is needed if there is no payment instrument, otherwise there is no need.
- at least one or more account membership service which is responsible for checking account status,
- at least one or more account balance service which is responsible for controlling balance on an account, at least one or more notification module which is responsible for sending a notification to users by an SMS, email, push notification for mobile or web etc.,
- at least one or more share/update module which performs updating an existing account sharing,
- at least one or more Share/Participant Add module which allows one more participant to be added to an existing account sharing.
- at least one or more Share/Participant Remove module which allows removal of a participant on the current account sharing.
- at least one or more Share/Restriction module which enables to define the restriction on the shared account.
- at least one or more Share/Delete module which performs deletion of an existing account share.
- at least one or more Share/ Acceptance & Rejection module allows the participant to be included in the share or not, based on the participant response for a defined account sharing.
- at least one or more Share master module which is responsible for related record generation of an account sharing.
- at least one or more Database which keeps all records, logs, updates, transactions, accounts, financial instruments. Keeping all records, logs, updates, transactions, accounts, financial instruments may also be made by any other way.

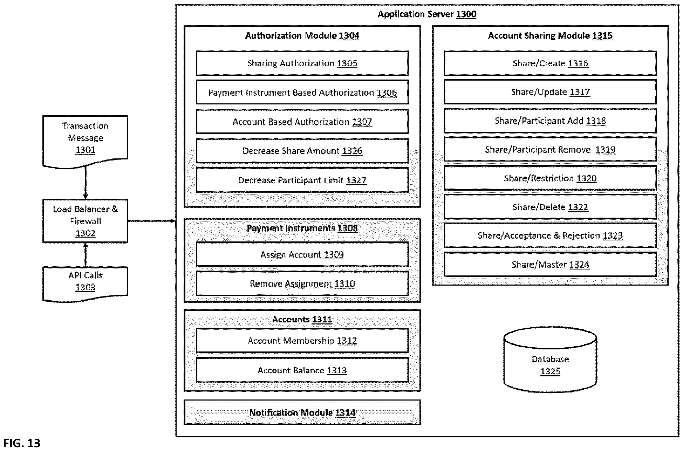

**Figure 13** illustrates an example application server modular diagram that shows mission critical modules of the invention and related integrations.

Transaction message **1301** represents financial transactions such as purchase. The transaction can be transmitted by a payment network, acquirer or a transaction source such as a POS, Virtual POS. The format and the data communication type can be configurable according to the financial instrument schema or process. Firewall **1302** is a technological barrier designed to prevent unauthorized or unwanted communications between networks and production servers. Load balancer **1302** distributes traffic across several servers according to data load. API Calls **1303** can be initiated by directly a client application on user device or a browser. Authorization module **1304** is responsible for generate a response for incoming transaction message. Payment instrument-based authorization **1306** is a sub service of authorization module responsible for payment instrument specific controls and authentication such as personal identification number (PIN) and cryptograms. Account based authorization **1307** is a sub service of authorization module responsible for direct financial request over an account such as in-app payments. Account based authorization requests doesn't require a financial instrument. If the transaction related a shared account, sharing authorization **1305** sub service is initiated for financial authorization about the transaction. Accounts **1311** holds all account information with balances. Account membership **1312** service is responsible for checking account status. Account balance **1313** service is responsible for controlling balance on an account. Notification module **1314** is responsible for sending a notification to users by an SMS, email, push notification for mobile or web etc.

Account sharing module **1315** provides required sub service for handling account share related process. Share/Create **1316** enables an account sharing request to be received and the account sharing to be created on the system. Share/Update **1317** performs updating an existing account sharing. Share/Participant Add **1318** allows one more participant to be added to an existing account sharing. Share/Participant Remove **1319** allows removal of a participant on the current account sharing. Share/Restriction **1320** enables to define the restriction on the shared account. Share/Delete **1322** performs deletion of an existing account share. Share/ Acceptance & Rejection **1323** allows the participant to be included in the share or not, based on the participant response for a defined account sharing. Share master **1324** is responsible for related record generation of an account sharing. Database **1325** keeps all records, logs, updates, transactions, accounts, financial instruments.

The third embodiment of the present invention comprises a module which creates the account sharing process. An example describing creation of account sharing is explained below.

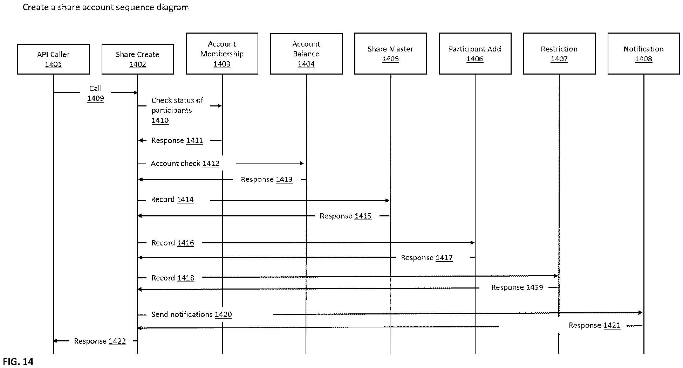

**Figure 14** illustrates an example sequence diagram for a creation of an account sharing process. API caller **1401** calls **1409** share create **1402** service for initiating the account sharing create process. Share create service **1402** calls **1410** account service for checking participant status for eligibility. If the participant(s) do not exist or do not meet the conditions to receive an account sharing, the request is rejected **1411.** If the participants meet the conditions, the approval response is returned to the share create **1411** service. The share create **1402** service controls the total amount of participants and the amount shared. If the amounts do not comply, the request is denied. If the amounts are compatible, the process continues. If there is a blocked account sharing, the required amount is checked sufficient balance in the share owner account by calling **1412** account balance service. If there is sufficient balance, approval **1413** is given. If there is not enough balance in the share owner account, the request is rejected **1413.** If the account sharing request passes the controls successfully, the share master service is called **1414** to share master **1405** create the records. If records are created, share master service returns successfully **1415.** If the records cannot be created, the request is denied **1415.** The share create service **1402** calls **1416** the participant add service to add the participants in the account sharing definition. If records are created, Participant add service returns successfully **1417.** If the records cannot be created, the request is denied **1417.** The share create service **1402** calls **1418** the restriction service to set up restrictions. If records are created, restriction **1407** service returns successfully **1419.** If the records cannot be created, the request is denied **1419.** The share create **1402** service calls **1420** the notification service **1408** to send the approval notifications to the participants and the notification of the definition to the share owner. Notification service **1408** returns a response **1421** according to the status of submissions. If an error is received from any service other than the Notification service, the request is denied **1422.** Except for the notification service, if the service responses are successful, the response that the account sharing process is successful is returned **1422.**

The third embodiment of the present invention comprises a module for changing the shared amount. An example describing changing the amount shared is explained below.

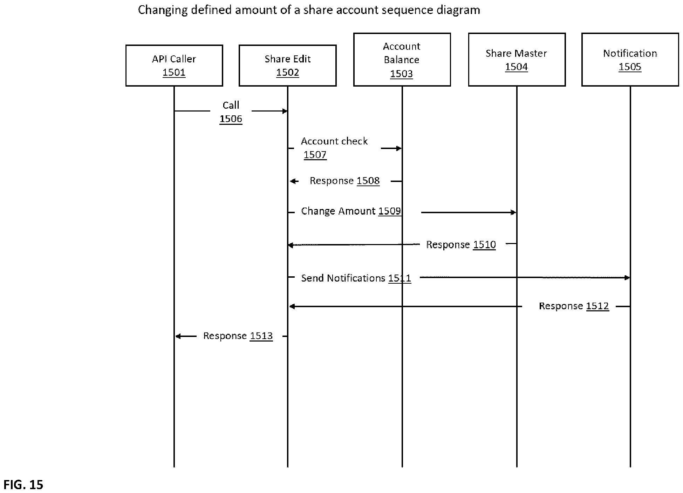

**Figure 15** illustrates an example sequence diagram for changing shared amount of an existing account sharing.

API caller **1501** calls **1506** share edit **1502** service for initiating changing defined amount of a share account process. If there is a blocked account sharing, the required amount is checked sufficient balance in the share owner account by calling **1507** account balance service **1503.** If there is sufficient balance, approval **1508** is given. If there is not enough balance in the share owner account, the request is rejected **1508.** The share edit **1502** service controls the total amount of participants and the amount shared. If the amounts do not comply, the request is denied **1513.** If the amounts are compatible, the process continues. Share edit service calls **1509** share master service **1504** for changing shared amount of an existing account sharing. If records are updated, share master service **1504** returns successfully **1510.** If the records cannot be updated, the request is denied **1510.** Share edit **1502** service calls **1511** the notification service **1505** to send the update notifications to the participants and the notification of the definition to the share owner. If an error is received from any service other than the Notification service, the request **1506** is denied **1513.** Except for the notification service, if the service responses are successful, the response that the changing amount of a share account process is successful is returned **1513.**

The third embodiment of the present invention comprises a module for updating the advance parameters such as share created, the total amount of the participants to be shared and the amount shared ... etc. An example describing the module for updating the advance parameters is explained below.

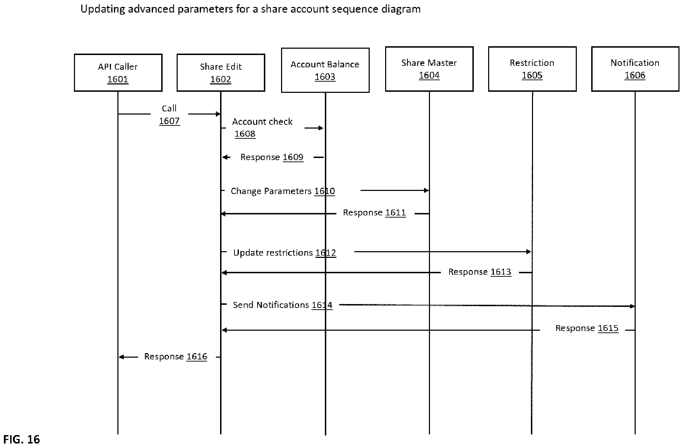

**Figure 16** illustrates an example sequence diagram for updating advance parameters on an account sharing.

API caller **1601** calls **1607** share edit **1602** service for initiating updating advance parameters of a share account process. The share create **1602** service controls the total amount of participants and the amount shared. If the amounts do not comply, the request is denied **1616.** If the amounts are compatible, the process continues. If there is a blocked account sharing, the required amount is checked sufficient balance in the share owner account by calling **1608** account balance service **1603.** If there is sufficient balance, approval **1609** is given. If there is not enough balance in the share owner account, the request is rejected **1609.** Share edit service **1602** calls **1610** share master service **1604** for updating advance parameters of an existing account sharing. If records are updated, share master service **1604** returns successfully **1611.** If the records cannot be updated, the request is denied **1611.** The share edit **1602** service calls **1614** the restriction service **1605** to update restrictions. If records are created, restriction **1605** service returns successfully **1613.** If the records cannot be created, the request is denied **1613.** If an error is received from any service other than the Notification service, the request **1607** is denied **1616.** Except for the notification service, if the service responses are successful, the response that the updating advance parameters of a share account process is successful is returned **1616.**

The third embodiment of the present invention comprises a module for adding a new participant to an existing account sharing process. An example describing the module for adding a new participant is explained below.

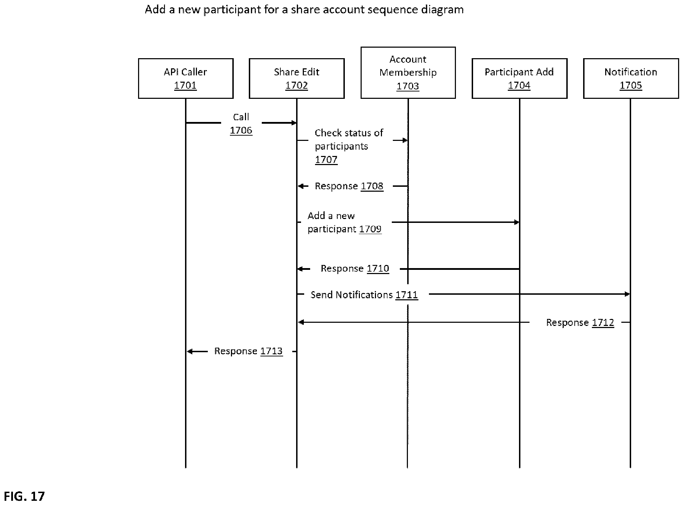

**Figure 17** illustrates an example sequence diagram for adding a new participant on an existing account sharing.

API caller **1701** calls **1706** share edit **1702** service for initiating adding a new participant process on an existing account sharing. Share edit **1702** service calls **1707** account membership service for checking participant status for eligibility. If the participant(s) do not exist or do not meet the conditions to receive an account sharing, the request is rejected **1708.** If the participants meet the conditions, the approval response **1708** is returned to the share edit **1702** service. Share edit **1702** service calls **1709** participant add **1704** service for adding new participant(s) to an existing account sharing. If records are updated, participant add service **1704** returns successfully **1710.** If the records cannot be created, the request is denied **1710.** Share edit **1702** service calls **1711** the notification service **1705** to send the update notifications to the participants and the notification of the definition to the share owner. Notification service **1705** returns a response **1712** according to the status of submissions. If an error is received from any service other than the Notification service, the request **1706** is denied **1713.** Except for the notification service, if the service responses are successful, the response that the participant add process is successful is returned **1713.**

The third embodiment of the present invention comprises a module for deleting an existing participant in an existing account sharing process. An example describing the module for deleting an existing participant is explained below.

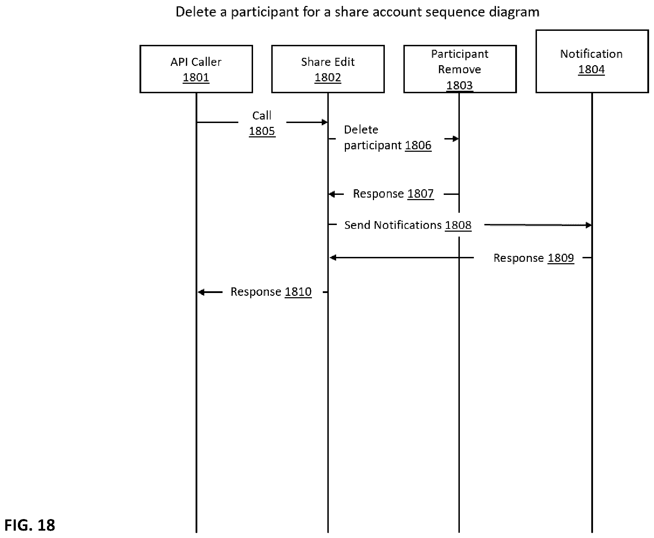

**Figure 18** illustrates an example sequence diagram for delete an existing participant on an existing account sharing.

API caller **1801** calls **1805** share edit **1802** service for initiating delete an existing participant to an existing account sharing process. Share edit service **1802** calls **1806** participant remove **1803** service for removing existing participant(s) to an existing account sharing. If records are updated, participant remove **1803** service returns successfully **1807.** If the records cannot be deleted, the request is denied **1807.** Share edit **1802** service calls **1808** the notification service **1804** to send the participant delete notifications to the participants and the notification of the definition to the share owner. Notification service **1804** returns a response **1809** according to the status of submissions. If an error is received from participant remove **1803** service, the request **1805** is denied **1810.** If the service response is successful, the response that the participant remove process is successful is returned **1810.**

The third embodiment of the present invention comprises a module for changing the limits of the participants in an existing account sharing process. An example describing the module for changing the limits of the participants is explained below.

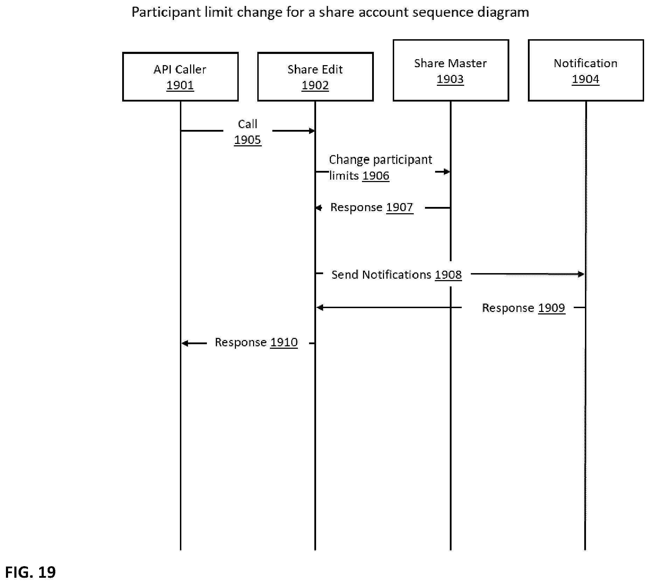

**Figure 19** illustrates an example sequence diagram for participant limit change on an existing account sharing.

API caller **1901** calls **1905** share edit **1902** service for initiating participant limit change process on an existing an account sharing. Share edit service **1902** calls **1906** share master **1903** service for updating participant(s) limit(s) to an existing account sharing. If records are updated, share master **1903** service returns successfully **1907.** If the records cannot be updated, the request is denied **1907.** The share edit **1902** service controls the total amount of participants and the amount shared. If the amounts do not comply, the request is denied. If the amounts are compatible, the process continues. Share edit **1902** service calls **1908** the notification service **1904** to send the participant limit update notifications to the participant(s) and the notification of the definition to the share owner. Notification service **1904** returns a response **1909** according to the status of submissions. If an error is received from share master **1903** service, the request **1905** is denied **1910.** If the service response is successful, the response that the participant remove process is successful **1910** is returned.

The third embodiment of the present invention comprises a module for deleting an existing account sharing on the system. An example describing the module for deleting an existing account sharing on the system is explained below.

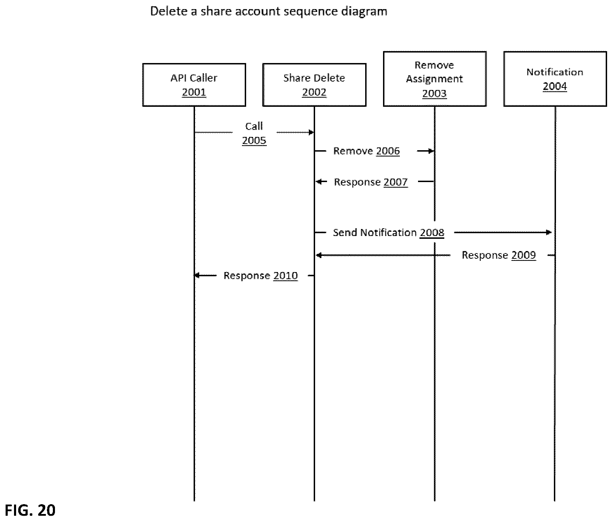

**Figure 20** illustrates an example sequence diagram for deleting an existing account sharing on the system.

API caller **2001** calls **2005** share delete **2002** service for initiating deleting process for an existing account sharing. Share edit delete **2002** calls **2006** remove assignment **2003** service for removing existing assignment(s) with the account sharing. If the assignment(s) is/are removed, remove assignment **2003** service returns successfully **2007.** If the assignment(s) cannot be updated, the request is denied **2007.** Share delete **2002** service calls **2008** the notification service **2004** to send deleting account sharing notifications to the participant(s) and the notification of the definition to the share owner. Notification service **2004** returns a response **2009** according to the status of submissions. If an error is received from remove assignment **2003** service, the request **2005** is denied **2010.** If the service response is successful, the response that the deleting an account sharing process is successful **2010** is returned.

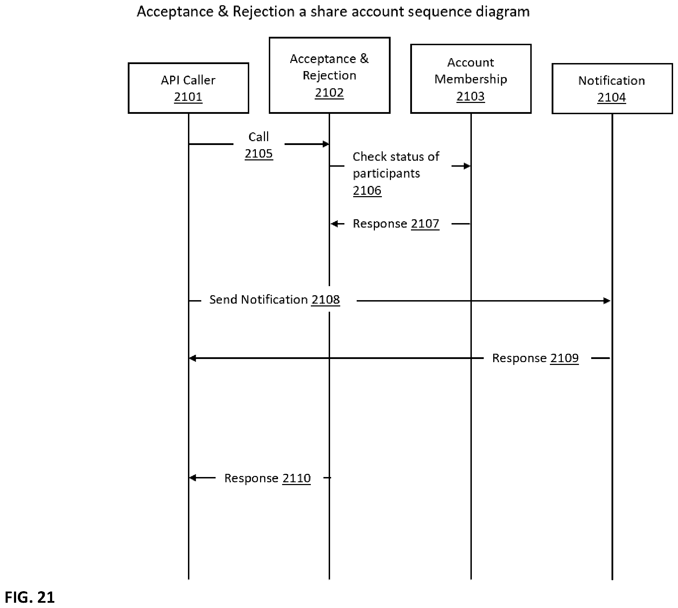

The third embodiment of the present invention comprises a module for handling participant acceptance & rejection process on an account sharing. An example describing the module for handling participant acceptance & rejection process on an account sharing is explained below. **Figure 21** illustrates an example sequence diagram for handling participant acceptance & rejection process on an account sharing.

API caller **2101** calls **2105** acceptance & rejection **2102** service for initiating participant acceptance & rejection process. Acceptance & rejection **2102** service calls **2106** account membership service **2103** for checking participant status for eligibility. If the participant(s) do not exist or do not meet the conditions to the approval process, the request is rejected **2107.** If the participants meet the conditions, the approval response **2107** is returned to the acceptance & rejection **2102** service. Acceptance & rejection **2102** service calls **2108** the notification service **2104** to send acceptance & rejection notifications to the share owner. Notification service **2104** returns a response **2109** according to the status of submissions. If an error is received from account membership **2103** service, the request **2105** is denied **2010.** If the service response is successful, the response that the acceptance & rejection process is successful **2110** is returned.

The third embodiment of the present invention comprises a module for assigning a shared account to a participant's financial instrument for usage. An example describing the module for assigning a shared account to a participant's financial instrument is explained below.

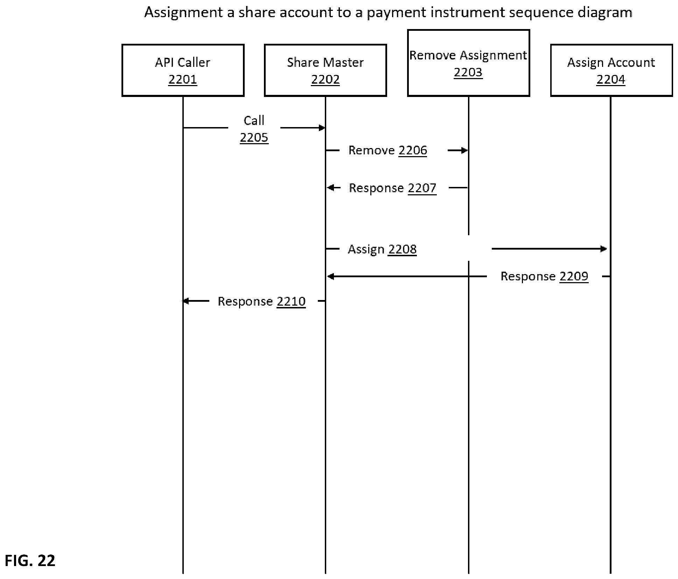

**Figure 22** illustrates an example sequence diagram for assigning a shared account to a participant financial instrument for usage.

API caller **2201** calls **2205** share master **2202** service for initiating for assigning a shared account to a participant financial instrument process. If there is an existing assignment between the financial instrument and an account. Share master **2202** calls **2206** remove assignment **2203** service for removing existing assignment with the account. If the assignment is removed, remove assignment **2203** service returns successfully **2207.** If the assignment cannot be updated, the request is denied **2207.** Share master **2202** calls **2208** assign account **2204** service for assigning the shared account to the financial instrument. If the assignment is successful, assign account **2204** service returns successfully **2209.** If the assignment cannot be updated, the request is denied **2209.** If an error is received from remove assignment **2203** or assign account **2204** service, the request **2205** is denied **2210.** If the service responses are successful, the response that the assigning the shared account to the financial instrument process is successful **2210** is returned.

The third embodiment of the present invention comprises a module for purchase authorization process on a shared account. An example describing the module for purchase authorization process on a shared account is explained below.

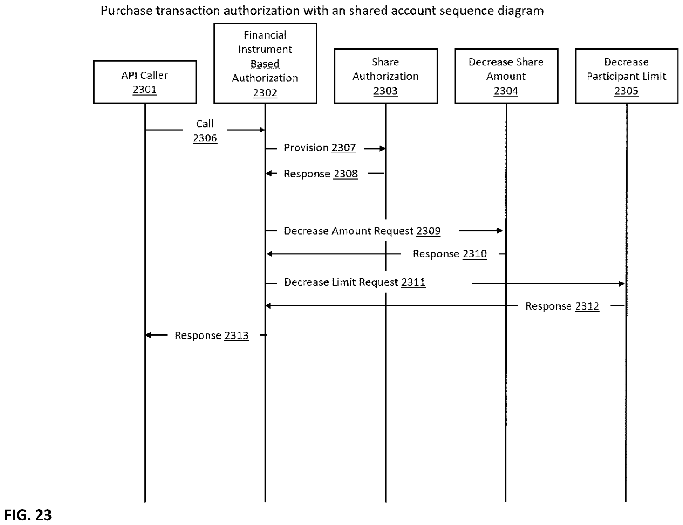

**Figure 23** illustrates an example sequence diagram for purchase authorization process on a shared account.

When a transaction is received, API caller **2301** calls **2306** financial instrument-based authorization **2302** service. Financial instrument-based authorization service performs financial instrument specific controls such as PIN verification, cryptogram verification, etc. If the controls are not successful, financial instrument based-authorization service **2302** returns a denied response **2313.** If the financial instrument has been assigned to a shared account, the financial instrument-based authorization **2302** service calls **2307** share authorization **2303** service for provision. The share authorization service **2303** controls the account sharing status, participant shared limit, sufficient balance on the shared account. If the share authorization service **2303** controls are successful, share authorization **2303** returns successful **2308** to Financial Instrument-based authorization **2302** service. If the share authorization service **2303** controls are not successful, share authorization **2303** returns denied **2308** to Financial Instrument-based authorization **2302** service. When a successful **2308** response is received by financial instrument-based authorization **2302,** a decrease amount request is called **2309.** If the decrease share amount request **2309** is processed properly, decrease share amount **2304** service returns successfully **2310.** If the decrease share amount request **2309** is not processed properly for any reason, the request is denied **2310.** When a successful **2310** response is received by financial instrument-based authorization **2302,** a decrease participant limit request is called **2311.** If the decrease participant limit request **2311** is not processed properly for any reason, the request is denied **2312.** If the decrease participant limit request **2311** is processed properly, decrease participant limit **2305** service returns successfully **2312.** If an error is received from any service in the process, the request **2306** is denied **2313.** If the service responses are successful, the response **2313** is returned as successful.

The third embodiment of the present invention comprises a module for creation of an account sharing process on the application server. An example describing the module for creation of an account sharing process on the application server is explained below.

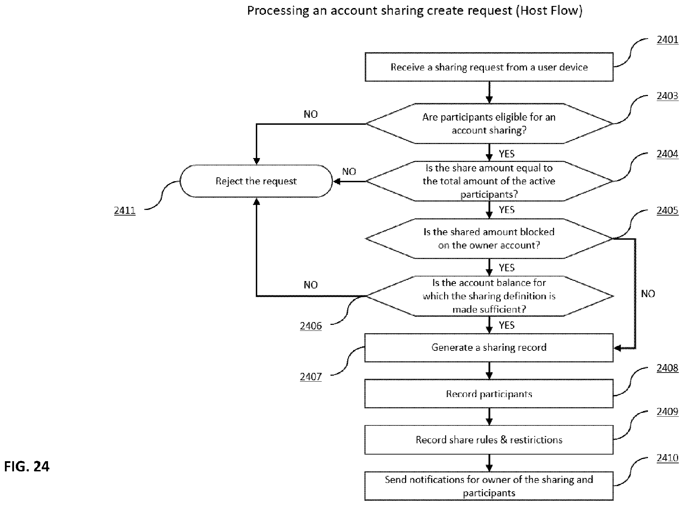

**Figure 24** illustrates an example flowchart diagram for processing an account sharing creation process on application server.

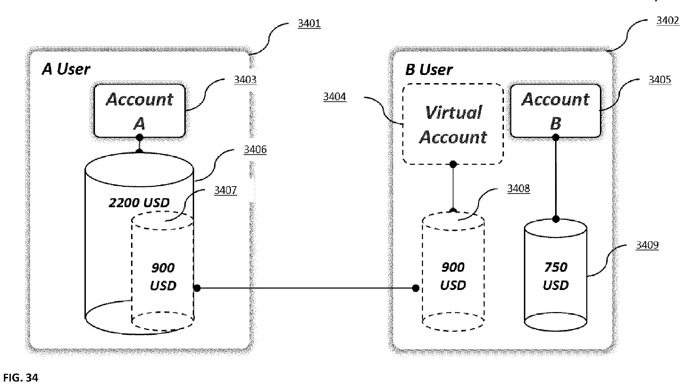

At block **2401,** an account sharing request sent from the user device is received by the system. The system checks whether the persons identified in the request are eligible to be a participant at block **2403.** Although not limited to these controls, eligibility controls include checks such as whether a customer is registered, customer status, and limits. If the eligibility controls are not successful, the request is rejected at block **2411.** If the eligibility controls are successful, the defined amounts of the participants are expected to match the main share amount at block **2404.** If the amount controls are not successful, the request is rejected at block **2411.** This amount control is done as form control on the client application, but it is also controlled by the central system in order not to cause financial issues. In the event that no specific limit is determined for the participant, all participants are authorized to use the entire main share amount. The total amount of the participants is not checked for an account sharing that does not have a specific limit for the participants. This is valid for the main shared amount checks with the total amount of all participants mentioned in **Fig. 14** - **Fig. 32****.** If the previous step is successful, it is checked whether the share owner shares the amount on the account blocked at block **2405.** In cases where the amount shared on the account is not blocked, the sufficient balance control is skipped without a control. If the share amount is shared as blocked, it is checked whether the account holder has sufficient balance in the related account at block **2406.** If there is sufficient balance, shared account registration is created by proceeding to the next step at block **2407.** If there is not enough balance in the account, the request is rejected at block **2411.** In cases where the amount shared on the account is not blocked, the owner of the account sharing can define any amount of account sharing even if there is not enough money in his account. In this case, the money in the account is opened to the use of the participants up to the amount defined in the account sharing definition within the participant limits. The sharing rules described for **2405** and **2406** are valid for all expressions between **Fig. 14** and **Fig. 34****.** In the block **2408,** participant(s) is/are registered in relation to the account share definition. In block **2409,** the restriction, usage rules that are requesting for the account sharing are recorded. Within these restrictions, participants' expenditures can be limited by parameters such as sector, sector group, specific merchant, location, number of transactions, maximum transaction amount etc. The terms of use include, but are not limited to, the date on which the sharing will end, and the time it repeats itself. The restriction and usage rules described for **2409** are valid for all expressions between **Fig. 14** and **Fig. 34****.** Shared accounts that expire are terminated with scheduled jobs running on the system.

The "account sharing" containing the definition of renewal are re-created with the information made in the definition on the renewal date. This creation includes all the controls of the share create process described in **Fig. 24****.** After the registration is completed, the notifications are sent to the relevant persons over the specified channels at block **2410.**

The third embodiment of the present invention comprises a module for processing an amount update request of an existing account sharing definition on the application server. An example describing the module for processing an amount update request of an existing account sharing definition on the application server is explained below.

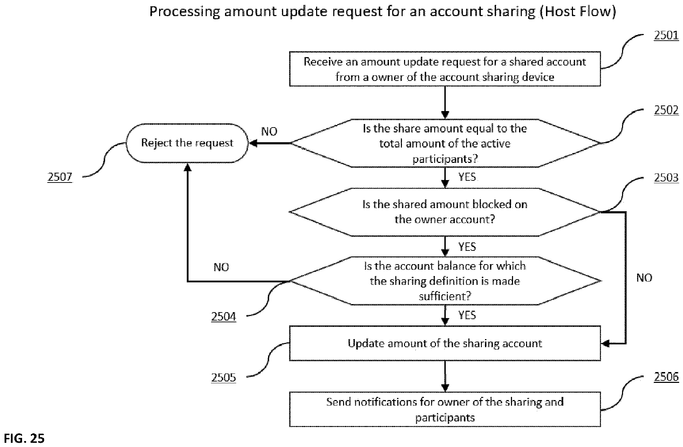

**Figure 25** illustrates an example flowchart diagram for processing an amount update request of existing account sharing definition on application server.

At block **2501,** an amount update request sent for an existing account sharing from the user device is received by the system. The defined amounts of the participants are expected to match the updated share amount at block **2502.** If the amount controls are not successful, the request is rejected at block **2507.** If the previous step is successful, it is checked whether the share owner shares the amount on the account blocked at block **2503.** In cases where the amount shared on the account is not blocked, the sufficient balance control is skipped without a control. If the share amount is shared as blocked, it is checked whether the account holder has sufficient balance in the related account at block **2504.** If there is sufficient balance, amount of the account sharing is updated **2507** by proceeding to the next step at block **2505.** If there is not enough balance in the account, the request is rejected at block **2407.** At block **2506,** the share amount is updated by the system. After the registration is completed, the notifications are sent to the relevant persons over the specified channels at block **2506.**

The third embodiment of the present invention comprises a module for processing adding a new participant or participants request of existing account sharing definition on application server. An example describing the module for processing adding new participant(s) request of existing account sharing definition on application server is explained below.

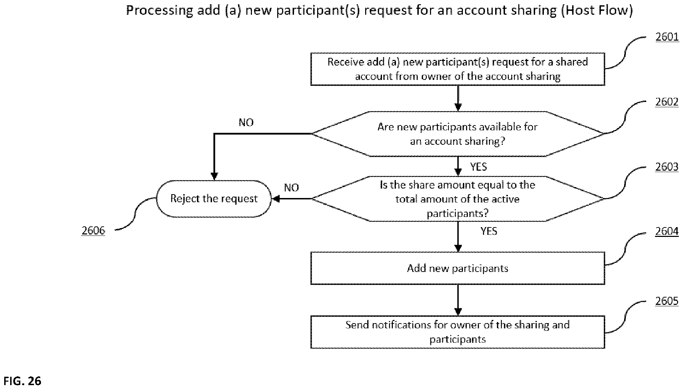

**Figure 26** illustrates an example flowchart diagram for processing add (a) new participant(s) request of existing account sharing definition on application server.

At block **2601,** add (a) new participant(s) request sent for an existing account sharing from the user device is received by the system. The system checks whether the persons identified in the request are eligible to be a participant at block **2602.** If the eligibility controls are not successful, the request is rejected at block **2606.** If the eligibility controls are successful, the defined amounts of the participants are expected to match the main share amount at block **2403.** If the amount controls are not successful, the request is rejected at block **2606.** If the previous step is successful, the participant(s) is/are added to the existing account sharing definition. After the registration is completed, the notifications are sent to the relevant persons over the specified channels at block **2605.**

The third embodiment of the present invention comprises a module for processing a participant deleting request of existing account sharing definition on application server. An example describing the module for processing a participant deleting request of existing account sharing definition on application server is explained below.

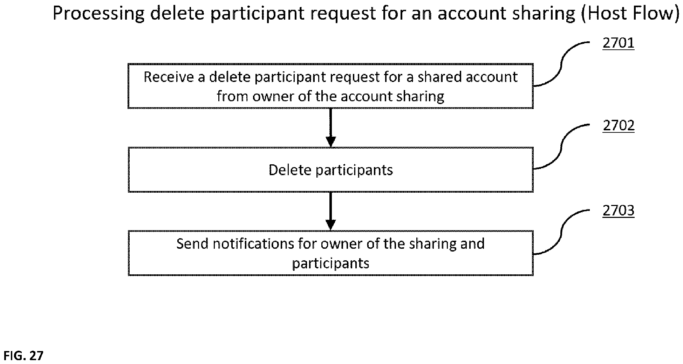

**Figure 27** illustrates an example flowchart diagram for delete participant request of existing account sharing definition on application server.

At block **2701,** delete participant(s) request sent for an existing account sharing from the user device is received by the system. The registration of the participant on the relevant account sharing is deleted by the system or taken to the deleted status at **2702.** After the update is completed, the notifications are sent to the relevant persons over the specified channels at block **2703.**

The third embodiment of the present invention comprises a module for processing a participant(s)' usage limit update request of existing account sharing definition on application server. An example describing the module for processing a participant(s)' usage limit update request of existing account sharing definition on application server, is explained below.

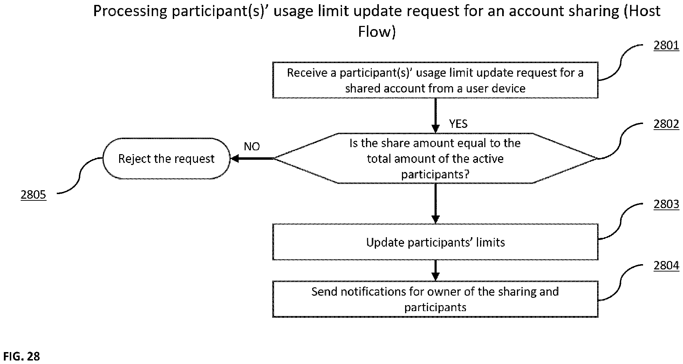

**Figure 28** illustrates an example flowchart diagram for participant(s)' usage limit update request of existing account sharing definition on application server.

At block **2801,** participant(s)' usage limit update request sent for an existing account sharing from the user device is received by the system. The defined amounts of the participants are expected to match the updated share amount at block **2802.** If the amount controls are not successful, the request is rejected at block **2805.** If the previous step is successful, the participant(s)' limit(s) is/are updated **2803.** After the update is completed, the notifications are sent to the relevant persons over the specified channels at block **2804.**

The third embodiment of the present invention comprises a module for processing the deleting request of existing account sharing definition on application server. An example describing the module for processing the deleting request of existing account sharing definition on application server is explained below.

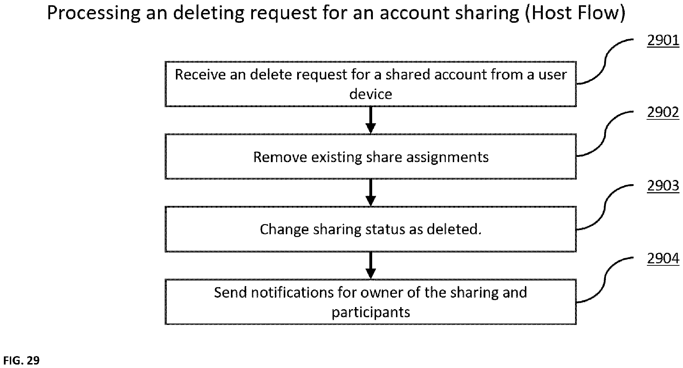

**Figure 29** illustrates an example flowchart diagram for deleting request of existing account sharing definition on application server.

At block **2901,** deleting request sent for an existing account sharing from the user device is received by the system. Assignments related to the account sharing are removed at block 2902. The account sharing record is removed by the system or its status is changed as removed at block **2903.** After the update is completed, the notifications are sent to the relevant persons over the specified channels at block **2904.**

The third embodiment of the present invention comprises a module for processing a response of participant of existing account sharing on application server. An example describing the module for processing a response of participant of existing account sharing on application server is explained below.

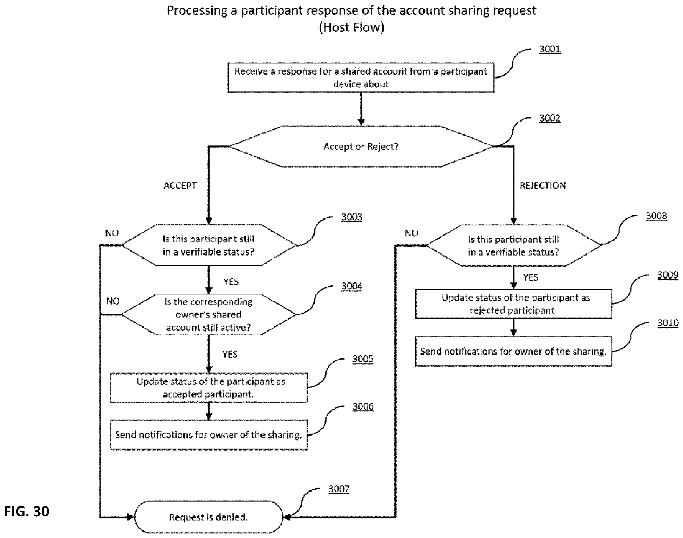

**Figure 30** illustrates an example flowchart diagram for processing a participant response of existing account sharing on application server.

At block **3001,** a participant response sent for an existing account sharing from the participant device is received by the system. The system detects whether the answer is rejected or accepted at block **3002.** If the response is an acceptance, the system checks whether the participant status can approve at block **3003.** The purpose of the status check is to prevent errors in processing approvals or rejections from different sources in the system. For example, a participant can reject the request from the browser. After processing the same response, the participant can approve the same request from the mobile application. In addition, during this verification process, the participant may have been deleted from the account sharing or a different reason may have occurred that would prevent using the sharing, (e.g. fraud status change). If the participant's status is not suitable for approval, the request is rejected at block **3007.** If the participant status check is successful, the system checks whether the account sharing is active or not at block **3004.** If the corresponding account sharing is not active, the request is denied at block **3007.** If the relevant account sharing status is active, the participant status is updated as approved at block **3005.** After the update is completed, the notifications are sent to the relevant persons over the specified channels at block **3006.** If the participant rejects the account sharing request, the participant status is checked at block **3008.** If the participant's status is not suitable for approval, the request is rejected at block **3007.** If the participant status check is successful, the participant status is updated as rejected at block **3009.** After the update is completed, the notifications are sent to the relevant persons over the specified channels at block **3010.**

The third embodiment of the present invention comprises a module for processing the request of "financial instrument assignment for an account sharing" on application server. An example describing the module for processing the request of "financial instrument assignment for an account sharing" on application server is explained below.

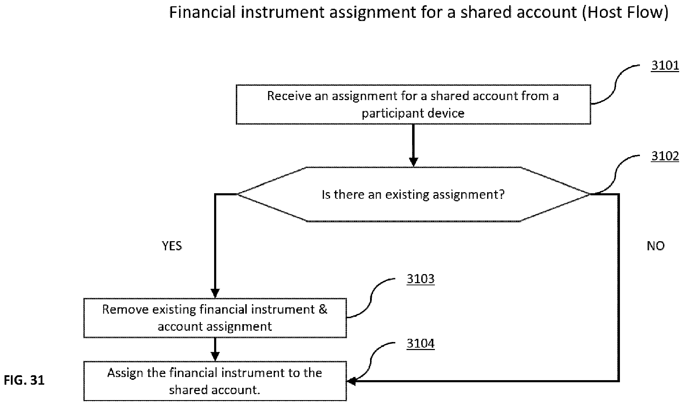

**Figure 31** illustrates an example flowchart diagram about processing "financial instrument assignment for an account sharing" request on application server.

At block **3101,** a financial instrument assignment request sent for an account sharing from the participant device is received by the system. The system checks whether the requested financial instrument has an existing assignment **3102.** If there is no assignment, system assigns the financial instrument to the requested account sharing at block **3104.** if there is an assignment, the system removes the assignment at block **3103.** After removing the assignment, system assigns the financial instrument to the requested account sharing at block **3104.**

The third embodiment of the present invention comprises a module for processing an authorization for a financial instrument transaction linked to a sharing account on application server. An example describing the module for processing an authorization for a financial instrument transaction linked to a sharing account on application server is explained below.

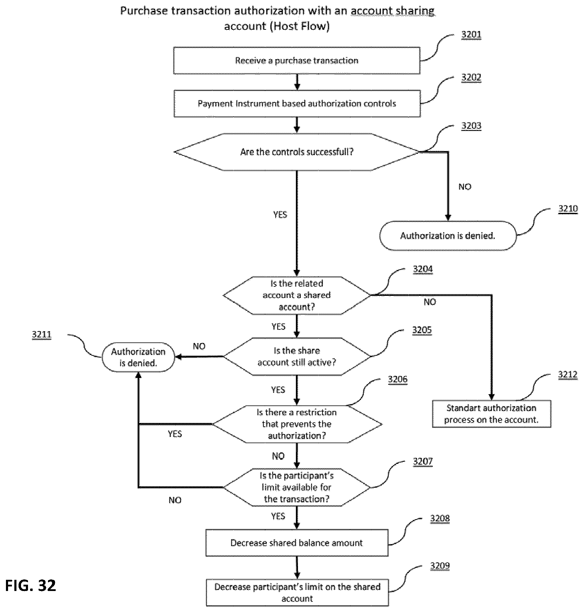

**Figure 32** illustrates an example flowchart diagram about authorization process for a financial instrument transaction linked to a sharing account on application server.

At block **3201,** the purchase transaction is received by the system. The system performs verification checks specific to the financial instrument at block **3202.** At block **3203,** Payment instrument based authorization result is checked. If the financial instrument-based verification checks fail, the transaction is rejected at block **3210.** At block **3204,** It is checked whether the account to which the financial instrument is linked is a sharing account. If the relevant account is not a sharing account, the standard authorization process continues at block **3212.** In case of a shared account, the system checks whether the account is active at block **3205.** If the account sharing is not active, the authorization is denied at block **3211.** If the relevant sharing account is active, it is checked whether there is any restriction that prevents the participant from performing the transaction at block **3206.** If there is a restriction, the authorization is denied at block **3211.** If the restriction checks are successfully completed, it is checked whether the participant has sufficient limit for this transaction amount **3207.** If there is not enough limit, the authorization is denied at block **3211.** If there is sufficient limit, the sharing account balance and participant limit are reduced by the transaction balance at blocks **3208** and **3209.**

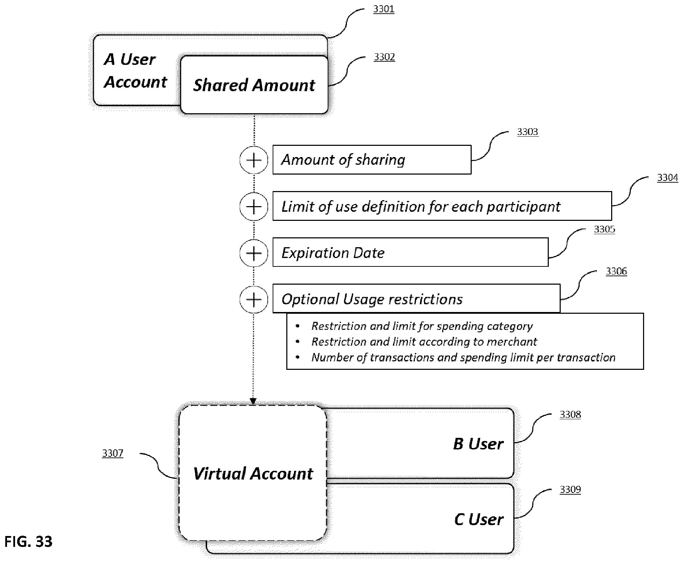

In the Figure 33, 34 35 and 36, the sample diagrams of;
- general perspective of the sharing process and virtual account representation,
- change of account balances according to a purchase transaction on an account sharing,
- first stage of example (before a purchase transaction),
- second stage of example (during the purchase transaction on an account sharing),
- third share of example (after the purchase transaction on an account sharing), of the third embodiment of the invention have been visualized respectively.

**Figure 33** illustrates a sample diagram for general perspective of the sharing process and virtual account representation.

The owner of sharing defines a part of their account **3301** as "shared amount" **3302.** This definition includes, but is not limited to, the amount of the share **3303,** the participants and limits **3304,** the expiration time of the share **3305,** and usage restrictions **3306.** Participants **3308, 3309** who accept the sharing see this shared account as a virtual account **3307** between their accounts and can use this amount according to the rules, time and limits defined for them.

In **Figure 34****,** **Figure 35** and **Figure 36****,** the change of account balances according to a purchase transaction on an account sharing are illustrated.

**3401, 3501, 3601** represent "A User" who is owner of the account sharing. **3402, 3502, 3602** represent "B User" who is the participant of the shared account. **3405, 3505, 3605** represent B User's account. Block **3409, 3509, 3609** represent amount of account B. **3403, 3503, 3603** represent A User's account. Block **3404, 3504, 3604** are virtual accounts that represents shared account.

**Figure 34** illustrates first stage of example - Before a purchase transaction Block **3406** is main balance of account A as 2200 USD. Block **3407** is shared amount as 900 USD. Block **3408** that is virtual representation of shared amount is only a reflection of **3407.**

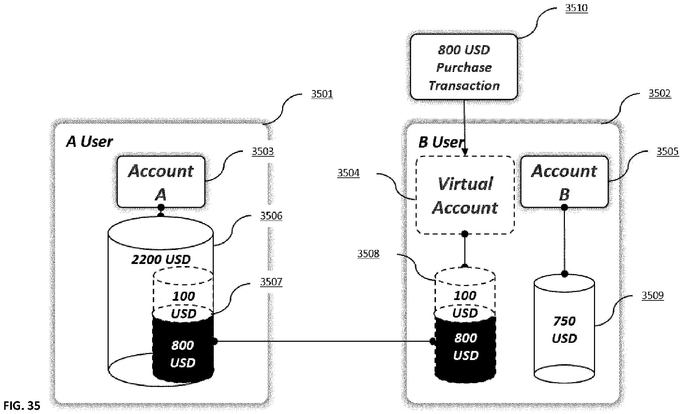

**Figure 35** illustrates second stage of example - during the purchase transaction on an account sharing

When a purchase transaction is performed through the participant shared account, the transaction will be processed on the virtual account, the purchase amount is shown in **3510** as 800 USD. In this case, the money is charged over the shared account **3507.** In this case, 800 USD was shown as the charged amount and 100 USD was shown as the remaining amount on the shared account. 3508 is only a reflection of **3507. 3506** is total amount of account A. **3511** and **3512** are not affected about the purchase.

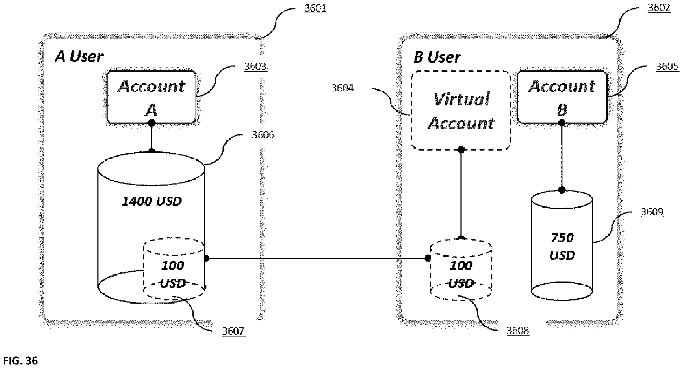

**Figure 36** illustrates third share of example - after the purchase transaction on an account sharing

After the purchase transaction is performed, **3606** remaining total balance is calculated as 2200 USD - 800 USD = 1400 USD. **3607** remaining shared balance is calculated as 900 USD - 800 USD = 100 USD. **3608** is only a reflection of **3607. 3609** and **3605** are not affected about the purchase.

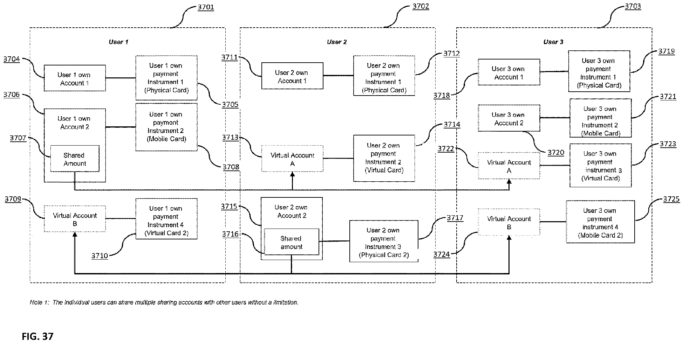

The complex hierarchy between accounts, shared accounts, financial instruments with user information of the third embodiment of the invention has been visualized in Figure 37.

**Figure 37** illustrates complex hierarchy between accounts, shared accounts, financial instruments with user information.

There is no main account and sub account relationship between User 1 **3701,** User 2 **3702,** and User 3 **3703.** The user has individual accounts and cards. All users have equal usage rights and status. All users can use their own accounts **3704, 3706, 3711, 3715, 3718, 3720** independently from each other with all management rights. The invention does not require any relationship such as a company, group, event, budget, before establishing an account sharing. All users can change financial instrument and account assignments in any time. User 1 Account 1 **3705** is assigned to User 1 Payment instrument 1 **3705.** For example; "shared amount" **3707** can be assigned payment instrument 1 **3705.** The user 1 can assign payment instrument 4 **3710** to Account 1 **3704.** Payment instruments **3705, 3708, 3710, 3712, 3714, 3717, 3719, 3721, 3723, 3725** represent a digital or physical personalized device(s) and/or set of procedures and used in order to initiate a payment order. (e.g. smart card, virtual card, QR code, Near Field Communication (NFC) contactless card, mobile payment device.).

User 1 **3701** is owner of the shared account **3707.** User 2 and User 3 are participants of the shared account **3707.** User 2 and User 3 can see the shared account **3707** as only virtual accounts **3713, 3722** in their account list. User 2 and User 3 has no management rights on the shared account **3707.** User 1 **3701** has all management rights on **3706, 3707.** If user 1 deletes the shared account **3707,** Only the **3713** and **3722** virtual accounts are deleted. When an account is deleted in the design, the system only deletes the assignment between the account and the financial instrument. After account deletion, the unassigned financial instrument can be used by assigning it to a different account.

Multiple account sharing can be defined between users. In the first sharing, User 1 shares **3707** account to User 2 and User 3 as virtual account A **3713, 3722.** User 1 is owner of **3707.** User 2 and user 3 are participants of **3707.** In the second sharing, User 2 shares **3716** account to User 1 and User 3 as virtual account B **3724, 3709.** User 2 is owner of **3716.** User 1 and User 3 are participants of **3716.**

Box 3708 is User 1 own payment instrument 2 that is assigned to User 1 Account 2 3706. Box 3712 is User 2 own payment instrument 1 that is assigned to User 2 Account 1 3711. Box 3714 is User 2 own payment instrument 2 that is assigned to virtual account A 3713. Box 3717 is User 2 own payment instrument 3 that is assigned to "shared amount" 3716 of User 2 Account 2 3715. In that case, owner of the account sharing can use the shared amount as a participant. Box 3719 is User 3 own payment instrument 1 that is assigned to account 1 3718. Box 3721 is User 3 own payment instrument 2 that is assigned to account 2 3720. Box 3723 is User 3 own payment instrument 3 that is assigned to virtual account A **3722.** Box **3725** is User 3 own payment instrument 4 that is assigned to virtual account B **3724.**

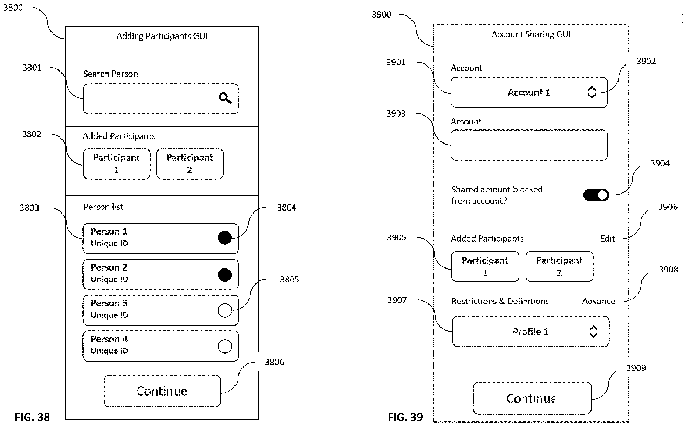

An example graphical user interface (GUI) for adding participant for an account sharing of the third embodiment of the invention has been visualized in Figure 38.

**Figure 38** illustrates an example graphical user interface (GUI) for adding participant for an account sharing.

This screen **3800** allows the user to add a participant to an account sharing by selecting from their contact list. Participants can be searched with a name, a phone number or a unique ID written in the user text box **3801.** The contact list can be received locally on the device or centrally on a server. The contact list can be received locally on the device or centrally on a server. The added participants are listed in **3802** area. The contact list **3803** can be scrolled up or down. The person can be added to the account sharing by clicking on the field **3804** next to the person. The mark in the **3804** field indicates whether the contact has been added. the user presses the continue button **3806** to complete the participant selection.

An example graphical user interface (GUI) for defining general parameters for an account sharing of the third embodiment of the invention has been visualized in Figure 39.

**Figure 39** illustrates an example graphical user interface (GUI) for defining general parameters of an account sharing.

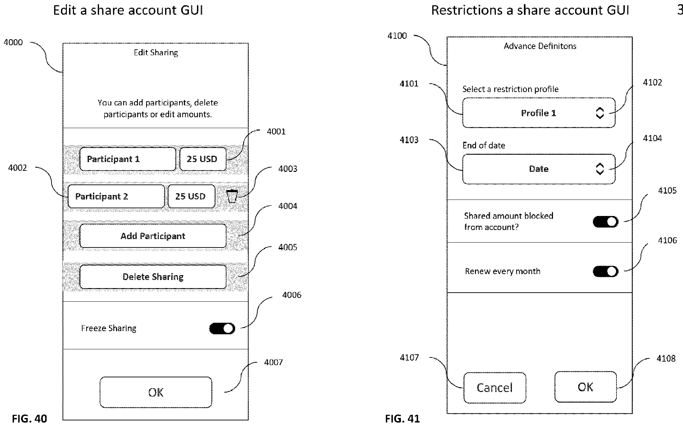

This screen **3900** allows the user to define general parameters of an account sharing. The box **3901** indicates selected account to be used for account sharing. **3902** open a drop-down list for listing existing account. The user can select a different account from the account list. Sharing amount is determined by writing in **3903** field. The user defines whether the defined amount will be blocked from the selected account or not by activating this toggle button **3904.** The added participants are listed in **3905** area. Detailed definitions can be made by clicking the edit button **3906** as **Figure 40****.** The user can define restrictions by choosing from preset profiles **3907.** The user can define the detail sharing and restriction parameters by pressing the advance button 3908 as **Figure 41****.**

An example graphical user interface (GUI) for editing an account sharing of the third embodiment of the invention has been visualized in Figure 40.

**Figure 40** illustrates an example graphical user interface (GUI) for editing an account sharing. This screen **4000** allows the user to edit parameters of an account sharing. Participant's limits can be changed on the box **4001.** The user swipes left **4002** on the participant and deletes the participant with the appeared delete button **4003. 4004** is the button for adding new participants. When **4004** button is pressed, the participant add screen in **Figure 38** opens. Account sharing can be deleted by pressing the **4005** button. The button **4006** allows to stop temporarily usage of the account sharing. The changes can be confirmed by clicking the OK button **4007.**

An example graphical user interface (GUI) for editing advance parameters an account sharing of the third embodiment of the invention has been visualized in Figure 41.

**Figure 41** illustrates an example graphical user interface (GUI) for editing advance parameters an account sharing.

This screen **4100** allows the user to edit advance parameters of an account sharing. The user can define restrictions by choosing from preset profiles **4101.** By clicking the button **4102,** one of the listed restriction profiles can be selected. The expiry date of the account sharing is shown in this field **4103.** The user defines whether the defined amount will be blocked from the selected account or not by activating this toggle button **4105.** The toggle button **4106** can be activated so that the account sharing is renewed every month. The changes can be confirmed by clicking the OK button **4108.** Click the cancel button **4107** to discard the changes made.

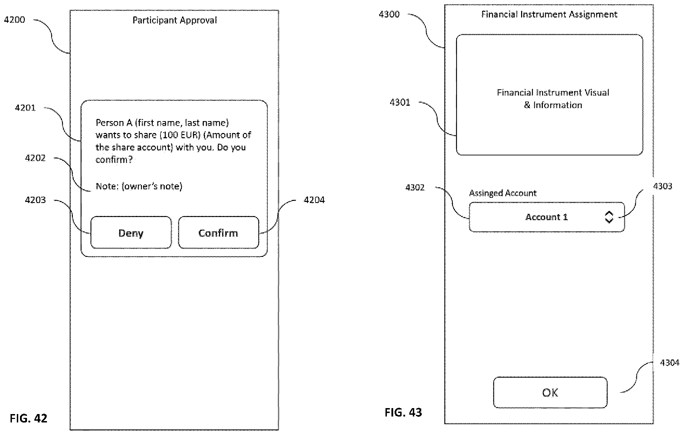

An example graphical user interface (GUI) for participant approval of an account sharing of the third embodiment of the invention has been visualized in Figure 42.

**Figure 42** illustrates an example graphical user interface (GUI) for participant approval of an account sharing.

This screen **4200** allows the participant to approve or deny the account sharing request received with a notification. 4201 is the notification box. **4202** is owner of the account sharing note. If **4203** button is pressed, the request is rejected. If **4204** button is pressed, the request is accepted.

An example graphical user interface (GUI) for financial instrument assignment to a shared account has been visualized in Figure 43.

**Figure 43** illustrates an example graphical user interface (GUI) for financial instrument assignment to a shared account.

This screen **4300** allows the selected financial instrument to be assigned to a shared account. The selected financial instrument is displayed in this area **4301.** The account information to be assigned is displayed in this area **4302. 4303** open a drop-down list for listing existing account. The user can select a different account from the account list. The assignment is confirmed by clicking the OK button **4304.**

## Claims

1. Computer implemented account balance sharing system where accounts are individual and independent, comprising,
• a module for creation of account sharing process,
• a module for purchase authorization process on a shared account

2. An account balance sharing system according to Claim 1 where module for creation of account sharing process comprises step of
• initiating the account sharing create process by incoming request
• control of the request
• create the record,
• sending approval notification

3. An account balance sharing system according to Claim 2 where account sharing is blocked or non-blocked.

4. An account balance sharing system according to Claim 2 or 3 further comprises steps of
• Amount control
• Generating the record about sharing and participant

5. An account balance sharing system according to Claim 2 further comprises steps of
• API caller calls share create service for initiating the account sharing create process,
• Share create service calls account service for checking participant status for eligibility,
• the request is rejected if the participant(s) do not exist or do not meet the conditions to receive an account sharing, otherwise the approval response is returned to the share create service if
• The share create service controls the total amount of participants and the amount shared,
• the request is denied if the amounts do not comply, otherwise the process continues
• the required amount is checked sufficient balance in the share owner account by calling account balance service if there is a blocked account sharing balance otherwise, approval is given
• the request is rejected if there is not enough balance in the share owner account
• share master service is called to share master create the records if the account sharing request passes the controls successfully, otherwise the request is denied
• The share create service calls the participant add service to add the participants in the account sharing definition, and if records are created, Participant add service returns successfully, otherwise request is denied
• The share create service calls the restriction service to set up restrictions, if records are created, restriction service returns successfully, otherwise, the request is denied
• The share create service calls the notification service to send the approval notifications to the participants and the notification of the definition to the share owner,
• Notification service returns a response according to the status of submissions, if an error is received from any service other than the Notification service, the request is denied
• Except for the notification service, if the service responses are successful, the response that the account sharing process is successful, is returned

6. An account balance sharing system as claimed in Claim 1 further comprising application server.

7. An account balance sharing system as claimed in Claim 6 wherein the application server comprises;
• at least one or more transaction message which represents financial transactions which are transmitted by a payment network, acquirer or a transaction source such as a POS, Virtual POS,
• at least one or more API Calls, code invocation which can be initiated by directly a client application on user device or a browser,
• at least one or more authorization module which is responsible for generate a response for incoming transaction message,
• at least one or more payment instrument-based authorization which is a sub service of authorization module responsible for payment instrument specific controls and authentication such as personal identification number (PIN) and cryptograms,
• at least one or more account based authorization which is a sub service of authorization module responsible for direct financial request over an account such as in-app payments. This authorization is needed if there is no payment instrument, otherwise there is no need,
• at least one or more account membership service which is responsible for checking account status,
• at least one or more Share/Participant Add module which allows one more participant to be added to an existing account sharing,
• at least one or more Share master module which is responsible for related record generation of an account sharing, or
• at least one or more Database which keeps all records, logs, updates, transactions, accounts, financial instruments.

8. An account balance sharing system according to claim 1 further comprises module for changing the shared amount.

9. An account balance sharing system according to claim 8 further comprises steps of
• Amount update request is received for a shared account
• Amount control
• Update amount of the sharing account

10. An account balance sharing system according to claim 9 comprises steps of
• API caller calls share edit service for initiating changing defined amount of a share account process, if there is a blocked account sharing, the required amount is checked sufficient balance in the share owner account by calling account balance service, if there is sufficient balance, approval is given, if there is not enough balance in the share owner account, the request is rejected
• The share edit service controls the total amount of participants and the amount shared, if the amounts do not comply, the request is denied, if the amounts are compatible, the process continues,
• Share edit service calls share master service for changing shared amount of an existing account sharing, if records are updated, share master service returns successfully, if the records cannot be updated, the request is denied
• Share edit service calls the notification service to send the update notifications to the participants and the notification of the definition to the share owner, if an error is received from any service other than the Notification service, the request is denied ,
• Except for the notification service, if the service responses are successful, the response that the changing amount of a share account process is successful is returned

11. An account balance sharing system according to claim 1 further comprises module for updating the advance parameters.

12. An account balance sharing system according to claim 11 comprises steps of
• Shared amount check
• Account sharing parameter change
• Restrictions update

13. An account balance sharing system according to claim 12 comprises steps of
• API caller calls share edit service for initiating updating advance parameters of a share account process,
• The share create service controls the total amount of participants and the amount shared, if the amounts do not comply, the request is denied, if the amounts are compatible, the process continues, if there is a blocked account sharing, the required amount is checked sufficient balance in the share owner account by calling account balance service, If there is sufficient balance, approval is given, if there is not enough balance in the share owner account, the request is rejected.
• Share edit service calls share master service for updating advance parameters of an existing account sharing, if records are updated, share master service returns successfully, if the records cannot be updated, the request is denied
• The share edit service calls the restriction service to update restrictions, if records are created, restriction service returns successfully, if the records cannot be created, the request is denied, if an error is received from any service other than the Notification service, the request is denied,
• Except for the notification service, if the service responses are successful, the response that the updating advance parameters of a share account process is successful is returned.

14. An account balance sharing system according to claim 1 further comprises module for adding a new participant to an existing account sharing process

15. An account balance sharing system according to claim 14 further comprises steps of
• Add participant request is received for a shared account
• Participant eligibility check
• Adding new participants

16. An account balance sharing system according to claim 15 further comprises steps of
• API caller calls share edit service for initiating adding a new participant process on an existing account sharing,
• Share edit service calls account membership service for checking participant status for eligibility, if the participant(s) do not exist or do not meet the conditions to receive an account sharing, the request is rejected, if the participants meet the conditions, the approval response is returned to the share edit service,
• Share edit service calls participant add service for adding new participant(s) to an existing account sharing, if records are ,updated, participant add service returns successfully , if the records cannot be created, the request is denied,
• Share edit service calls the notification service to send the update notifications to the participants and the notification of the definition to the share owner,
• Notification service returns a response according to the status of submissions, if an error is received from any service other than the Notification service, the request is denied,
• Except for the notification service, if the service responses are successful, the response that the participant add process is successful is returned.

17. An account balance sharing system according to claim 1 further comprises module for deleting an existing participant

18. An account balance sharing system according to claim 17 further comprises steps of
• Delete participant request is received for a shared account.
• Delete participants

19. An account balance sharing system according to claim 18 ccomprises steps of
• API caller calls share edit service for initiating delete an existing participant to an existing account sharing process,
• Share edit service calls participant remove service for removing existing participant(s) to an existing account sharing, if records are updated, participant remove service returns successfully, if the records cannot be deleted, the request is denied
• Share edit service calls the notification service to send the participant delete notifications to the participants and the notification of the definition to the share owner,
• Notification service returns a response according to the status of submissions, if an error is received from participant remove service, the request is denied, if the service response is successful, the response that the participant remove process is successful is returned.

20. An account balance sharing system according to claim 1 further comprises module for changing the limits of the participants.

21. An account balance sharing system according to claim 20 further comprises
• Participant limit update request is received for a shared account
• Amount control
• Participant limit update

22. An account balance sharing system according to claim 21 comprises steps of
• API caller calls share edit service for initiating participant limit change process on an existing an account sharing,
• Share edit service calls share master service for updating participant(s) limit(s) to an existing account sharing, if records are updated, share master service returns successfully, if the records cannot be updated, the request is denied
• The share edit service controls the total amount of participants and the amount shared, if the amounts do not comply, the request is denied, if the amounts are compatible, the process continues.
• Share edit service calls the notification service to send the participant limit update notifications to the participant(s) and the notification of the definition to the share owner,
• Notification service returns a response according to the status of submissions, if an error is received from share master service, the request is denied, if the service response is successful, the response that the participant remove process is successful is returned.

23. An account balance sharing system according to claim 1 further comprises module for assigning a shared account to a participant's financial instrument for usage

24. 18. An account balance sharing system according to claim 23 where financial instrument is digital or physical personalized device

25. 19. An account balance sharing system according to claim 18 where financial instrument is smart card, virtual card, QR code, Near Field Communication (NFC) contactless card, or mobile payment device.

26. An account balance sharing system according to claim 23 comprises steps of
• Financial instrument assignment request is received for a shared account
• Assign a financial instrument to a shared account

27. An account balance sharing system according to claim 1 where a module for purchase authorization process on a shared account comprises module of processing an authorization for a financial instrument transaction linked to a sharing account on application server

28. An account balance sharing system according to claim 27 comprises steps of
• Receive a purchase transaction
• Limit control on the shared account
• Decrease shared account balance

29. An account balance sharing system according to claim 28 comprises steps of
• When the purchase transaction is received by the system, the system performs verification checks specific to the financial instrument,
• Payment instrument based authorization result is checked, if the financial instrument-based verification checks fail, the transaction is rejected,
• It is checked whether the account to which the financial instrument is linked is a sharing account, if the relevant account is not a sharing account, the standard authorization process continues,
• In case of a shared account, the system checks whether the account is active , if the account sharing is not active, the authorization is denied, if the relevant sharing account is active, it is checked whether there is any restriction that prevents the participant from performing the transaction , if there is a restriction, the authorization is denied, if the restriction checks are successfully completed, it is checked whether the participant has sufficient limit for this transaction amount, if there is not enough limit, the authorization is denied, if there is sufficient limit, the sharing account balance and participant limit are reduced by the transaction balance.
